# EUROPEAN PATENT SPECIFICATION

(11) **EP 3 825 529 B1**
(45) Date of publication and mention of the grant of the patent: **05.04.2023**
(21) Application number: 20199870.5
(22) Date of filing: 18.12.2015
(51) Int. Cl.: F01N 3/24, F01N 3/20, F01N 3/28, F01N 11/00, F01N 13/00, F01N 13/08, F01N 13/10, B62M 7/02, F02D 41/14

(54) **STRADDLED VEHICLE**
GRÄTSCHSITZFAHRZEUG
VÉHICULE À ENFOURCHER

(30) Priority: 19.12.2014 JP 2014256983; 19.12.2014 JP 2014256984; 19.12.2014 JP 2014256985; 06.04.2015 JP 2015077744; 07.08.2015 JP 2015157520
(43) Date of publication of application: 26.05.2021
(62) Divisional of application: 15870102.9
(73) Proprietor: YAMAHA HATSUDOKI KABUSHIKI KAISHA, Iwata-shi Shizuoka 438-8501 (JP)
(72) Inventor: TAKASU, Daisuke, Iwata-shi, Shizuoka 438-8501 (JP); WAKIMURA, Makoto, Iwata-shi, Shizuoka 438-8501 (JP); OKU, Yuji, Iwata-shi, Shizuoka 438-8501 (JP); KOBAYASHI, Makoto, Iwata-shi, Shizuoka 438-8501 (JP)
(74) Representative: Zimmermann, Tankred Klaus

(56) References cited:
- EP-A1- 1 643 096
- EP-A1- 2 031 200
- EP-A2- 1 749 987
- JP-A- 2014 137 001
- US-A1- 2006 283 180
- US-A1- 2007 039 317

## Description

### [Technical Field]

The present invention relates to a straddled vehicle.

### [Background Art]

A known straddled vehicle is provided with an engine unit in which a plurality of independent exhaust passage members are connected to an engine main body. Exhaust gas discharged from the engine main body flows into these independent exhaust passage members. The independent exhaust passage members are typically connected to a catalyst portion (catalytic converter) via a collective exhaust passage member. Exhaust gas discharged from the independent exhaust passage members is gathered in the collective exhaust passage member. A catalyst for purifying the exhaust gas is provided inside the catalyst portion.

The catalyst portion is, for example, provided straight or directly below the engine main body (see e.g., Patent Literature 1). The cross-sectional area of the catalyst portion is larger than that of the collective exhaust passage member. Each cross-sectional area is a cross-sectional area cut along the direction orthogonal to the flow direction of the exhaust gas. When the catalyst portion is provided straight below the engine main body so that the flow direction of the exhaust gas is along the front-rear direction, the catalyst portion is long in the up-down direction. Due to this, the seat or the like needs to be positioned higher to ensure a sufficient distance between the ground and the catalyst portion, with the result that the straddled vehicle is disadvantageously large in the up-down direction.

To solve this problem, Patent Literature 1 employs structures described below.

According to Patent Literature 1, four independent exhaust passage members are arranged such that each of two pairs of independent exhaust passage members is connected to one collective exhaust passage member. The two collective exhaust passage members are connected to two catalyst portions, respectively. The two catalyst portions are provided side by side in the vehicle width direction. In other words, according to Patent Literature 1, two catalysts are provided for four independent exhaust passage members and these two catalysts are provided to be side by side in the vehicle width direction. The catalyst portions are short in the up-down direction for this reason.

In this way, according to Patent Literature 1, the increase in size of the vehicle in the up-down direction is restrained while a suitable distance between the ground and the catalyst portion is ensured, by suitably arranging the layout or shape of the catalyst.

### [Citation List]

### [Patent Literatures]

[Patent Literature 1] Japanese Unexamined Patent Publication No. 2007-51571.

EP 1 749 987 A2 describes an exhaust system and engine device and vehicle with the same.[Summary of Invention]

### [Technical Problem]

These days improvement in exhaust gas purification performance by using catalysts has been demanded. For this reason, catalysts tend to be increased in size. According to Patent Literature 1, the catalyst portion has already been arranged to be short in the up-down direction. Due to this, if the size of the catalyst is increased in the straddled vehicles of Patent Literature 1, it is difficult to keep the catalyst portion short in the up-down direction. It is therefore difficult to restrain the increase in size of the vehicle in the up-down direction while securing a suitable distance between the ground and the catalyst portion.

An object of the present invention is to provide a straddled vehicle with a catalyst provided straight below an engine main body, in which the increase in size of the vehicle is restrained in an up-down direction while exhaust gas purification performance of a catalyst is improved.

### [Solution to Problem and Advantageous Effects]

A known means for improving the exhaust gas purification performance by a catalyst is to upsize the catalyst. Inventors of the subject application reconsidered a reason why the upsizing of a catalyst was required. An engine unit in which a plurality of independent exhaust passage members are connected to an engine main body tends to include a plurality of combustion chambers. Such an engine unit having a plurality of combustion chambers repeats an intake process, a compression process, a combustion process (expansion process), and an exhaust process at timings different between the combustion chambers. A pressure variation in each independent exhaust passage member is different between the independent exhaust passage members. For this reason, a problem occurs when a collective exhaust passage member and a catalyst portion are lined up in the front-rear direction below an engine main body as in Patent Literature 1 described above. That is to say, exhaust gas flowing from one independent exhaust passage member to the collective exhaust passage member is hardly scattered in the collective exhaust passage member, before flowing into the catalyst portion. Due to this, deviation of a position where the exhaust gas passes the catalyst tends to occur. To put it differently, in a cross-section orthogonal to the flow direction of the exhaust gas in the catalyst, the flow rate of the passing exhaust gas tends to be uneven. Due to this, in order to attain sufficient exhaust gas purification performance of the catalyst even when the position where the exhaust gas passes the catalyst is deviated, the catalyst is often arranged to be redundantly large. For this reason, the catalyst portion tends to be increased in size.

Under this circumstance, the inventors of the subject application presumed that the increase in size of the catalyst was restrained while the exhaust gas purification performance of the catalyst was maintained if the deviation of the position where the exhaust gas passes the catalyst was restrained. To achieve this, the inventors conceived of adjusting the position and shape of a collective exhaust passage member provided between the independent exhaust passage members and the catalyst portion below the engine main body.

A straddled vehicle of the present teaching includes: a vehicle body frame; an engine unit supported by the vehicle body frame; a front wheel unit including at least one front wheel and provided in front of the engine unit in a vehicle front-rear direction when viewed in a vehicle left-right direction; and a rear wheel unit including at least one rear wheel and provided behind the engine unit in the front-rear direction when viewed in the left-right direction. The engine unit includes: an engine main body disposed so that the central axis Cy of each of the cylinder holes is along the up-down direction and including a crankcase member, cylinder holes, combustion chambers, and exhaust ports, the crankcase member including a crankshaft having a central axis Cr being along the left-right direction, the combustion chambers being side by side along the left-right direction and each of which is partially formed by the cylinder hole, and the exhaust ports communicating with the respective combustion chambers and being formed on a front surface of the engine main body; and an exhaust device connected to the exhaust ports of the engine main body and including an atmosphere discharge port discharging exhaust gas to the atmosphere. The exhaust device includes: independent exhaust passage members connected to the respective exhaust ports of the engine main body, exhaust gas discharged from the engine main body flowing into the independent exhaust passage members; a below-engine catalyst portion including a main catalyst which purifies the exhaust gas discharged from the combustion chambers most in exhaust paths from the combustion chambers to the atmosphere discharge port, the length of the below-engine catalyst portion in a flow direction of the exhaust gas being identical to the length of the main catalyst in the flow direction of the exhaust gas, at least a part of the below-engine catalyst portion being provided straight below the crankcase member in a vehicle up-down direction, at least a part of the below-engine catalyst portion being provided forward of the central axis Cr of the crankshaft in the front-rear direction, when viewed in the left-right direction, at least a part of the below-engine catalyst portion being provided straight above a line segment which is the lowest one of line segments connecting points on the outline of the engine main body with points on the outline of the front wheel unit, and the flow direction of the exhaust gas flowing in the below-engine catalyst portion being along a horizontal direction; and an upstream collective exhaust passage member which includes a bended portion by which the flow direction of the exhaust gas flowing in the bended portion is changed from a direction along the up-down direction to a direction along the horizontal direction, the upstream collective exhaust passage member being connected to downstream ends of the independent exhaust passage members and an upstream end of the below-engine catalyst portion, the upstream collective exhaust passage member being configured to merge the exhaust gas exhausted from the independent exhaust passage members. An upstream oxygen sensor configured to detect the oxygen density in the exhaust gas is provided on the upstream collective exhaust passage member being partially provided in front of the engine main body in the front-rear direction and partially overlapping the engine main body when viewed in the front-rear direction.

According to the structure as claimed in the claims, the straddled vehicle includes the vehicle body frame, the engine unit, the front wheel unit, and the rear wheel unit. Hereinafter, a left-right direction, a front-rear direction, and an up-down direction are a vehicle left-right direction, a vehicle front-rear direction, and a vehicle up-down direction, respectively. The engine unit is supported by the vehicle body frame. The front wheel unit includes at least one front wheel. The front wheel unit is provided in front of the engine unit when viewed in the left-right direction. The rear wheel unit includes at least one rear wheel. The rear wheel unit is provided behind the engine unit when viewed in the left-right direction. The engine unit includes the engine main body and the exhaust device. The engine main body includes the crankcase member. The crankcase member includes the crankshaft having the central axis along the left-right direction. The engine main body includes the cylinder holes and the combustion chambers. The cylinder holes are side by side in the left-right direction. A part of each of the combustion chambers is formed by each of the cylinder holes. The exhaust ports communicating with the respective combustion chambers are formed in the front surface of the engine main body. The exhaust device is connected to the exhaust ports of the engine main body. The exhaust device has the atmosphere discharge port for discharging the exhaust gas to the atmosphere. The exhaust device includes the independent exhaust passage members, the below-engine catalyst portion, and the upstream collective exhaust passage member. The independent exhaust passage members are connected to the exhaust ports of the engine main body, respectively. The exhaust gas discharged from the engine main body flows in the independent exhaust passage members. The below-engine catalyst portion includes the main catalyst. In the exhaust paths from the combustion chambers to the atmosphere discharge port, the main catalyst purifies the exhaust gas discharged from the combustion chambers most. The length in the flow direction of the exhaust gas of the below-engine catalyst portion is identical to the length in the flow direction of the exhaust gas of the main catalyst. The upstream collective exhaust passage member is connected to the downstream ends of the independent exhaust passage members and the upstream end of the below-engine catalyst portion.

In the straddled vehicle structured as described above, at least a part of the below-engine catalyst portion is provided straight below the crankcase member. The below-engine catalyst portion is provided so that the flow direction of the exhaust gas flowing therein is along the horizontal direction. The direction along the horizontal direction is not limited to the direction in parallel to the horizontal direction. This direction includes a direction tilted by +45 to -45 degrees with respect to the horizontal direction. Furthermore, at least a part of the upstream collective exhaust passage member connected to the upstream end of the below-engine catalyst portion is provided in front of the engine main body. The path length of the upstream collective exhaust passage member is therefore elongated when compared to cases where the upstream collective exhaust passage member is not provided in front of the engine main body. The scattering of the exhaust gas in the upstream collective exhaust passage member is therefore facilitated.

The upstream collective exhaust passage member includes a bended portion. The bended portion changes the flow direction of the exhaust gas flowing therein, from the direction along the up-down direction to the horizontal direction. Because the flow direction of the exhaust gas is changed by the upstream bended portion which is provided in the upstream collective exhaust passage member, the scattering of the exhaust gas in the upstream collective exhaust passage member is facilitated.

Because the scattering of the exhaust gas in the upstream collective exhaust passage member is facilitated, deviation of a position where the exhaust gas passes the main catalyst is restrained. Accordingly, as compared with cases where the position is deviated, the exhaust gas purification performance of the main catalyst is improved while the size of the main catalyst is maintained. Due to this, the exhaust gas purification performance of the main catalyst is improved while the increase in size of the vehicle in the up-down direction is restrained.

The straddled vehicle of the present teaching includes the following feature. The engine main body is disposed so that the central axis of each of the cylinder holes is along the up-down direction. Further embodiments of the present teaching are disclosed by the appended claims.

### [Brief Description of Drawings]

[FIG. 1] FIG. 1 is a right side view of a motorcycle of a First Embodiment according to the invention.
[FIG. 2] FIG. 2 is a cross-section taken along a line II-II in FIG. 1 according to the invention.
[FIG. 3] FIG. 3 is a right side view of a part of an engine unit according to the invention.
[FIG. 4] FIG. 4 is a front view of a part of the engine unit according to the invention.
[FIG. 5] FIG. 5 is a schematic diagram of a part of the engine unit.
[FIG. 6] FIG. 6 is a schematic diagram of a part of the engine unit.
[FIG. 7] FIG. 7 is a cross-section of a muffler member.
[FIG. 8] FIG. 8 is a plan view of an exhaust device.
[FIG. 9] FIG. 9 is a cross-section taken along a line A-A in FIG. 3.
[FIG. 10] FIG. 10 is a cross-section taken along a line B-B in FIG. 3.
[FIG. 11] FIG. 11 is a right side view of a part of an engine unit of Modification 1 covered by the present invention.
[FIG. 12] FIG. 12 is a right side view of a part of an engine unit of Modification 2 covered by the present invention.
[FIG. 13] FIG. 13 is a cross-section of a turbocharger of Modification 2 covered by the present invention.
[FIG. 14] FIG. 14 is a side view of the turbocharger of Modification 2 covered by the present invention.
[FIG. 15] FIG. 15 is a right side view of a motorcycle of an Example not covered by the invention.
[FIG. 16] FIG. 16 is a bottom view of the engine unit not covered by the invention.
[FIG. 17] FIG. 17 is a right side view of a part of an engine unit not covered by the invention.
[FIG. 18] FIG. 18 is a bottom view of the engine main body not covered by the invention.
[FIG. 19] FIG. 19 is a schematic diagram of a part of the engine unit not covered by the invention.
[FIG. 20] FIG. 20 is a schematic diagram of a part of the engine unit not covered by the invention.
[FIG. 21] FIG. 21 is a cross-section taken along a line D-D in FIG. 15 and FIG. 16.
[FIG. 22] FIG. 22 is a right side view of a part of an engine unit of a modification.
[FIG. 23] FIG. 23 is a cross-section of an upstream exhaust passage member of another modification.

### [Description of Embodiments]

### (First Embodiment)

The following will describe the First Embodiment of the present invention. The present embodiment is an example in which a straddled vehicle of the present teaching is embodied as a sports-type motorcycle. Hereinafter, a front-rear direction is a vehicle front-rear direction for a rider seated on a below-described seat 9 of a motorcycle 1. A left-right direction is a vehicle left-right direction for the rider seated on the seat 9. The vehicle left-right direction is identical to a vehicle width direction. In each figure, arrows F and B indicate forward and backward, respectively, arrows L and R indicate leftward and rightward, respectively, and arrows U and D indicate upward and downward, respectively. The present embodiment is described based on the definition of terms described at the end of this specification. The same applies to later-described embodiments and modifications.

### [Overall Structure of Motorcycle]

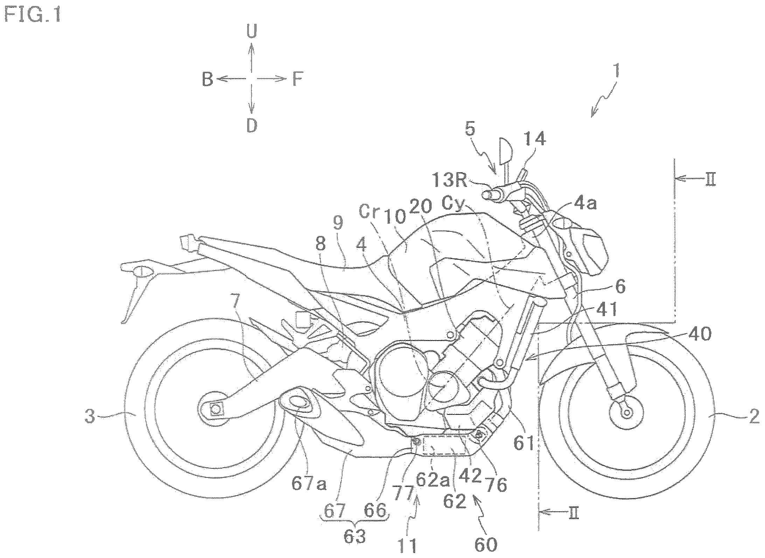

As shown in FIG. 1, the motorcycle 1 is provided with a front wheel unit 2, a rear wheel unit 3, and a vehicle body frame 4. The vehicle body frame 4 includes a head pipe 4a at a front portion. A steering shaft (not illustrated) is rotatably inserted into the head pipe 4a. An upper end portion of the steering shaft is connected to a handle unit 5. An upper end portion of a pair of front forks 6 is fixed to the handle unit 5. The lower end portions of the front forks 6 support the front wheel unit 2. The front forks 6 are configured to absorb shocks in the up-down direction. The front wheel unit 2 includes a single front wheel. An upper part of the front wheel unit 2 is covered with a fender. This fender is not included in the front wheel unit 2.

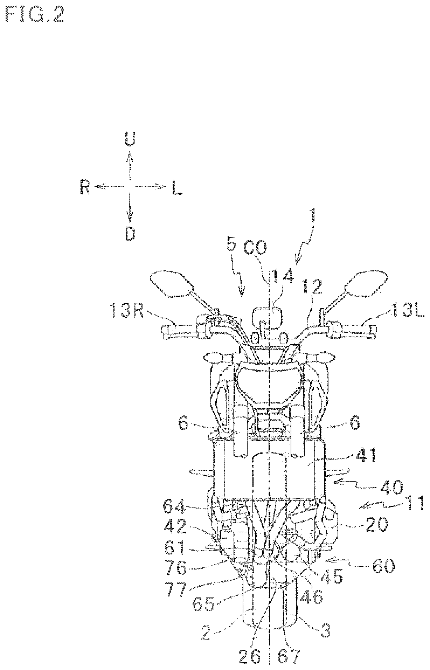

As shown in FIG. 2, the handle unit 5 includes a single handlebar 12 which extends in the left-right direction. Grips 13L and 13R are provided at left and right ends of the handlebar 12, respectively. The left grip 13R is a throttle grip for adjusting the output of the engine. A display 14 is attached to the handlebar 12. Although not illustrated, the display 14 displays vehicle speed, engine rotation speed, and the like. A warning lamp is provided on the display 14. Furthermore, switches are provided on the handlebar 12.

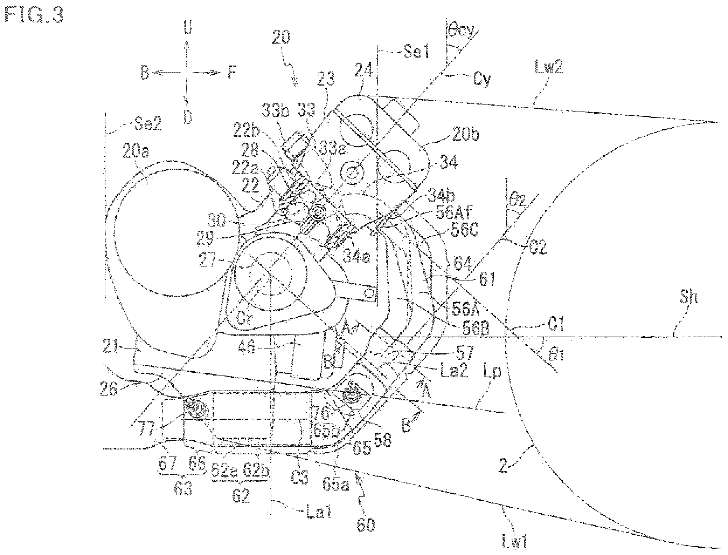

As shown in FIG. 1, a pair of swingarms 7 is swingably supported by the vehicle body frame 4. The rear end portions of the swingarms 7 support the rear wheel unit 3. The rear wheel unit 3 includes a single rear wheel. One end portion of a rear suspension 8 is attached to a part of each swingarm 7, which is rearward of the swing center. The other end portion of the rear suspension 8 is attached to the vehicle body frame 4. The rear suspension 8 is configured to absorb shocks in the up-down direction. FIG. 1, FIG. 2, and later-described FIG. 3 show a state in which the front forks 6 and the rear suspension 8 are maximally elongated in the up-down direction. In other words, the vehicle body frame 4 is at the highest relative to the front wheel unit 2 and the rear wheel unit 3.

The vehicle body frame 4 supports the seat 9 and the fuel tank 10. The fuel tank 10 is provided in front of the seat 9. The vehicle body frame 4 supports the engine unit 11. The engine unit 11 may be directly or indirectly connected to the vehicle body frame 4. The engine unit 11 is provided straight below the fuel tank 10. The engine unit 11 is provided below the upper end of the seat 9. The front wheel unit 2 is provided in front of the engine unit 11 when viewed in the left-right direction. The rear wheel unit 3 is provided behind the engine unit 11 when viewed in the left-right direction. As shown in FIG. 2, the width in the left-right direction of the engine unit 11 is longer than the width in the left-right direction of the front wheel unit 2. The width in the left-right direction of the engine unit 11 is longer than the width in the left-right direction of the rear wheel unit 3. In this specification, the width in the left-right direction indicates the maximum length in the left-right direction. The vehicle body frame 4 supports a battery (not illustrated). The battery supplies electric power to electronic devices such as a controller (not illustrated) for controlling the engine unit 11 and sensors.

### [Structure of Engine Unit]

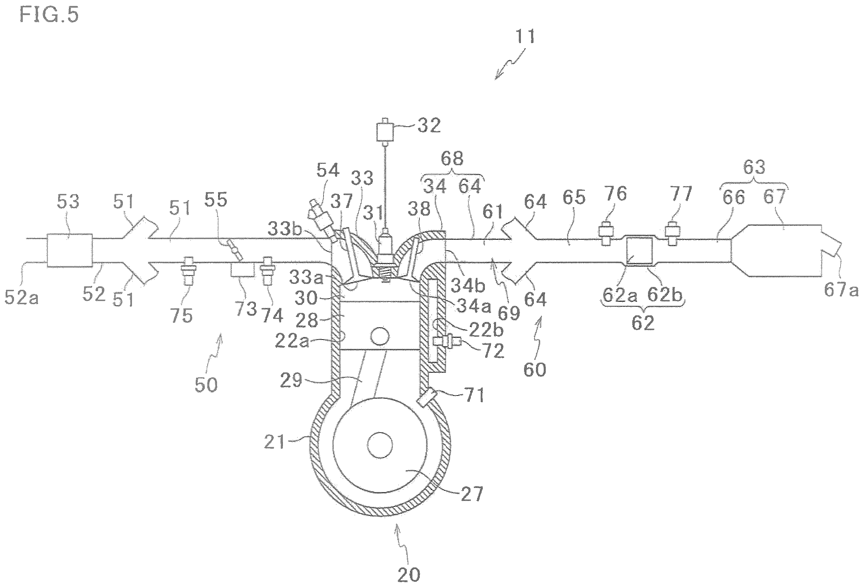

As shown in FIG. 1, the engine unit 11 includes an engine main body 20, a water cooling device 40, and an exhaust device 60. As shown in FIG. 5, the engine unit 11 further includes an intake device 50. The engine main body 20 is connected to the water cooling device 40, the intake device 50, and the exhaust device 60. The engine unit 11 is a 3-cylinder engine including 3 cylinders. The engine unit 11 is a 4-stroke engine. The 4-stroke engine repeats an intake process, a compression process, a combustion process (expansion process), and an exhaust process. The combustion process in the 3-cylinder engine is performed at different timings in the respective 3 cylinders. FIG. 5 shows only one of the 3 cylinders of the engine main body 20 and does not show the remaining 2 cylinders.

The engine unit 11 is a water-cooled engine. The engine main body 20 is cooled by coolant water. To the water cooling device 40, hot coolant water having absorbed heat from the engine main body 20 is supplied from the engine main body 20. The water cooling device 40 decreases the temperature of the coolant water supplied from the engine main body 20 and returns the coolant water to the engine main body 20. The water cooling device 40 includes a radiator41, a radiatorfan (not illustrated), and a reserve tank 42. The radiator41 is provided in front of an upper part of the engine main body 20. The radiator fan is provided between the engine main body 20 and the radiator 41. The reserve tank 42 is provided in front of a lower part of the engine main body 20. The reserve tank 42 is provided in front of a right part of the engine main body 20. The reserve tank 42 may not be provided in front of a right part of the engine main body 20. The engine unit 11 includes a water pump (not illustrated) for circulating the coolant water. This water pump is provided in the engine main body 20.

### [Structure of Engine Main Body]

As shown in FIG. 3, the engine main body 20 includes a crankcase member 20a and a cylinder portion 20b. The crankcase member 20a is provided at a lower part of the engine main body 20. The cylinder portion 20b is provided at an upper part of the engine main body 20. The cylinder portion 20b is connected to an upper end portion of the crankcase member 20a.

The crankcase member 20a includes a crankcase 21 and an oil pan 26. The crankcase member 20a is further provided with a crankshaft 27 housed in the crankcase 21. Although not illustrated, the crankcase member 20a includes a transmission, a clutch, a starter motor, and a power generator. These members are also housed in the crankcase 21. Hereinafter, the central axis Cr of the crankshaft 27 is referred to as a crankshaft axis Cr. The crankshaft axis Cr is along the left-right direction. To be more specific, the crankshaft axis Cr is in parallel to the left-right direction.

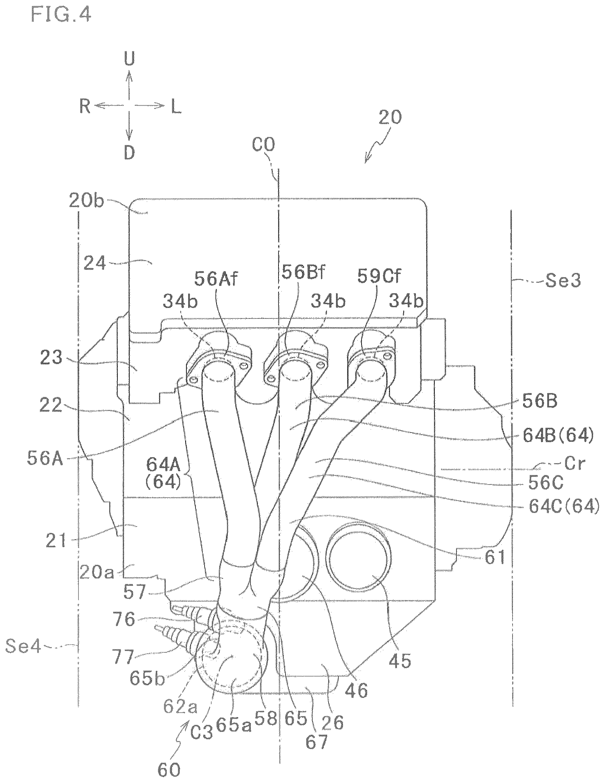

The oil pan 26 is provided at a lower part of the crankcase member 20a. The oil pan 26 is connected to a lower end of the crankcase 21. When viewed in the left-right direction, the border between the oil pan 26 and the crankcase 21 is substantially a linear line. When viewed in the left-right direction, an extension of the border between the oil pan 26 and the crankcase 21 is referred to as a linear line Lp. The linear line Lp is along the front-rear direction. The linear line Lp is inclined with a negative slope in the forward direction. The linear line Lp may orthogonally intersect with a later-described cylinder axial line Cy. As shown in FIG. 4, a right part of the oil pan 26 is dented. In other words, the right part of the oil pan 26 is above the left part of the oil pan 26. A part of the exhaust device 60 is provided in the dent of the oil pan 26. The oil pan 26 stores lubrication oil. The crankcase member 20a includes an oil pump (not illustrated) which is configured to suck the lubrication oil stored in the oil pan 26.

As shown in FIG. 4, an oil filter 45 and an oil cooler 46 are provided at a front portion of the crankcase member 20a. The oil cooler 46 is provided substantially at the center in the left-right direction of the crankcase member 20a. The oil filter 45 is provided to the left of the oil cooler 46. It is assumed that a plane which passes the center in the left-right direction of the front wheel unit 2 and the rear wheel unit 3 is C0. The center in the left-right direction of the front wheel unit 2 and the rear wheel unit 3 is the center in the left-right direction of the motorcycle 1. Hereinafter, the center in the left-right direction of the motorcycle 1 will be referred to as the center C0 in the left-right direction of the motorcycle 1. The oil cooler 46 is provided to overlap the center C0 in the left-right direction of the motorcycle 1. The oil filter 45 is provided to the left of the center C0 in the left-right direction of the motorcycle 1. As shown in FIG. 3, the oil cooler 46 protrudes forward from the front surface of the crankcase 21. Being similar to the oil cooler 46, the oil filter 45 also protrudes from the front surface of the crankcase 21. A filter main body (not illustrated) is provided inside the oil filter 45. The filter main body is configured to remove foreign matter in the lubrication oil. In consideration of the replacement of the filter main body, the oil filter 45 is arranged to be detachable from the crankcase 21.

As shown in FIG. 3, the cylinder portion 20b includes a cylinder body 22, a cylinder head 23, and a head cover 24. The cylinder body 22 is connected to an upper end portion of the crankcase 21. The cylinder head 23 is connected to an upper end portion of the cylinder body 22. The head cover 24 is connected to an upper end portion of the cylinder head 23.

As shown in FIG. 3 and FIG. 5, cylinder holes 22a are formed in the cylinder body 22. Three cylinder holes 22a are formed in the cylinder body 22. The three cylinder holes 22a are side by side in the left-right direction. A piston 28 is slidably housed in each cylinder hole 22a. The three pistons 28 are connected to a single crankshaft 27 via three connecting rods 29. Around the three cylinder holes 22a, a cooling passage 22b is formed to allow the coolant water to flow therein.

Hereinafter, the central axis Cy of the cylinder hole 22a is referred to as a cylinder axial line Cy. The three cylinder axial lines Cy are in parallel to one another. When viewed in the left-right direction, the three cylinder axial lines Cy overlap. As shown in FIG. 3, the cylinder axial lines Cy do not intersect with the crankshaft axis Cr. The cylinder axial lines Cy may intersect with the crankshaft axis Cr. The cylinder axial lines Cy are along the up-down direction. When viewed in the left-right direction, each cylinder axial line Cy is inclined in the front-rear direction with respect to the up-down direction. The cylinder axial line Cy is inclined so that the cylinder portion 20b is inclined forward. In other words, the cylinder axial line Cy is inclined with a positive slope in the forward direction. When viewed in the left-right direction, an inclination angle of the cylinder axial line Cy with respect to the up-down direction is termed an inclination angle θcy. The inclination angle θcy is not limited to the angle shown in FIG. 3. The inclination angle θcy is 0 degrees or greater than 0 degrees and 45 degrees or less than 45 degrees.

As shown in FIG. 3 and FIG. 5, combustion chambers 30 are formed in the cylinder portion 20b. Three combustion chambers 30 are formed in the cylinder portion 20b. The three combustion chambers 30 are side by side in the left-right direction. Each combustion chamber 30 is formed of the lower surface of the cylinder head 23, the cylinder hole 22a, and the upper surface of the piston 28. In other words, a part of the combustion chamber 30 is formed by the inner surface of the cylinder hole 22a. As shown in FIG. 3, it is assumed that a linear line which passes the crankshaft axis Cr and is in parallel to the up-down direction when viewed in the left-right direction is a linear line La1. When viewed in the left-right direction, the three combustion chambers 30 are provided in front of the linear line La1. In other words, when viewed in the left-right direction, the three combustion chambers 30 are provided forward of the crankshaft axis Cr.

A leading end portion of an ignition plug 31 is provided in the combustion chamber 30, as shown in FIG. 5. Spark discharge occurs at the leading end portion of the ignition plug 31. With this spark discharge, air-fuel mixture in the combustion chamber 30 is ignited. In this specification, the air-fuel mixture indicates a mixture of air and fuel. The ignition plug 31 is connected to an ignition coil 32. The ignition coil 32 stores electric power to cause spark discharge of the ignition plug 31. The ignition plug 31 and the ignition coil 32 constitute an ignition device.

Internal intake passage members 33 and internal exhaust passage members 34 are formed in the cylinder head 23. In this specification, a passage member is a structure forming a path. A path is a space through which gas or the like passes. The internal intake passage member 33 is connected to the combustion chamber 30. The internal intake passage member 33 is provided for each combustion chamber 30. The internal exhaust passage member 34 is connected to the combustion chamber 30. The internal exhaust passage member 34 is provided for each combustion chamber 30. The internal intake passage member 33 is provided to introduce air into the combustion chamber 30. The internal exhaust passage member 34 is provided to discharge the exhaust gas generated in the combustion chamber 30 from the combustion chamber 30.

A combustion chamber intake port 33a and a combustion chamber exhaust port 34a are formed in surfaces of the cylinder head 23 which form the combustion chamber 30. The combustion chamber intake port 33a is at the downstream end of the internal intake passage member 33. The combustion chamber exhaust port 34a is at the upstream end of the internal exhaust passage member 34. Intake ports 33b and exhaust ports 34b are formed in an outer surface of the cylinder head 23. The intake port 33b is at the upstream end of the internal intake passage member 33. The exhaust port 34b is at the downstream end of the internal exhaust passage member 34. The number of combustion chamber intake ports 33a provided for one combustion chamber 30 may be one, two, or more than two. The number of intake ports 33b is only one for one combustion chamber 30. For example, when two combustion chamber intake ports 33a are provided for one combustion chamber 30, the internal intake passage member 33 is formed to be branched into two. The number of combustion chamber exhaust ports 34a provided for one combustion chamber 30 may be one, two, or more than two. The number of exhaust ports 34b is only one for one combustion chamber 30. As shown in FIG. 3, the intake ports 33b are formed in the front surface of the cylinder head 23. The exhaust ports 34b are formed in the front surface of the cylinder head 23. As shown in FIG. 4, the three exhaust ports 34b are arranged to be side by side along the left-right direction.

As shown in FIG. 5, in the internal intake passage member 33, an intake valve 37 is provided to open and close the combustion chamber intake port 33a. The intake valve 37 is provided for each combustion chamber intake port 33a. In the internal exhaust passage member 34, an exhaust valve 38 is provided to open and close the combustion chamber exhaust port 34a. The exhaust valve 38 is provided for each combustion chamber exhaust port 34a. The intake valve 37 and the exhaust valve 38 are driven by a valve driving device (not illustrated) housed in the cylinder head 23. The valve driving device operates in sync with the crankshaft 27. The valve driving device may include a variable valve timing device. A known device is used as the variable valve timing device. The variable valve timing device is configured to change the timings to open and close the intake valve and/or the exhaust valve.

The engine main body 20 includes injectors 54. Each injector 54 is a fuel supplier configured to supply fuel to the combustion chamber 30. The injector 54 is provided for each combustion chamber 30. The injector 54 is positioned to inject fuel in the internal intake passage member 33. The injector 54 is connected to the fuel tank 10. A fuel pump (not illustrated) is provided inside the fuel tank 10. The fuel pump supplies fuel in the fuel tank 10 to the injector 54 with a pressure. The injector 54 may be positioned to inject fuel in the combustion chamber 30. Alternatively, the injector 54 may be positioned to inject fuel in a later-described branched intake passage member 51 of the intake device 50. The engine main body 20 may include a carburetor as a fuel supplier instead of the injector 54. The carburetor is configured to supply fuel into the combustion chamber 30 by utilizing a negative pressure in the combustion chamber 30.

The engine main body 20 includes an engine rotation speed sensor 71 and an engine temperature sensor 72. The engine rotation speed sensor 71 detects the rotation speed of the crankshaft 27, i.e., the engine rotation speed. The engine temperature sensor 72 detects the temperature of the engine main body 20. In the present embodiment, the engine temperature sensor 72 indirectly detects the temperature of the cylinder body 22 by detecting the temperature of the coolant water in the cooling passage 22b. The engine temperature sensor 72 may directly detect the temperature of the cylinder body 22.

### [Structure of Intake Device]

The intake device 50 includes one intake passage member 52 and three branched intake passage members 51. The intake passage member 52 is provided with an atmosphere suction port 52a which is exposed to the atmosphere. The atmosphere suction port 52a is at the upstream end of the intake passage member 52. The intake passage member 52 is provided with an air cleaner 53 configured to purify air. The downstream end of the intake passage member 52 is connected to the upstream ends of the three branched intake passage members 51. The downstream ends of the three branched intake passage members 51 are connected to the three intake ports 33b formed in the rear surface of the cylinder head 23, respectively. The atmosphere suction port 52a sucks air from the atmosphere. The air flowing into the intake passage member 52 through the atmosphere suction port 52a is supplied to the engine main body 20 via the three branched intake passage members 51.

A throttle valve 55 is provided in the branched intake passage member 51. One throttle valve 55 is provided for each combustion chamber 30. The opening degree of the throttle valve 55 is changed as the rider rotationally operates the throttle grip 13R.

A throttle position sensor 73, an intake pressure sensor 74, and an intake temperature sensor 75 are provided in each branched intake passage member 51. The throttle position sensor 73 detects the position of the throttle valve 55 and outputs a signal indicating a throttle opening degree. The throttle opening degree indicates the opening degree of the throttle valve 55. The intake pressure sensor 74 detects an internal pressure of the branched intake passage member 51. The intake temperature sensor 75 detects the temperature of air in the branched intake passage member 51.

### [Structure of Exhaust Device]

As shown in FIG. 5, the exhaust device 60 includes an upstream exhaust passage member 61, a catalyst portion (catalytic converter) 62, and a downstream collective exhaust passage member 63. Hereinafter, the upstream and downstream in the flow direction of exhaust gas of the exhaust device 60 and the internal exhaust passage member 34 will be simply referred to as upstream and downstream. The upstream exhaust passage member 61 includes three independent exhaust passage members 64 and an upstream collective exhaust passage member 65. One independent exhaust passage member 64 is provided for each combustion chamber 30. The downstream collective exhaust passage member 63 includes a downstream exhaust passage member 66 and a muffler member 67. The upstream ends of the three independent exhaust passage members 64 are connected to the three exhaust ports 34b formed in the front surface of the cylinder head 23, respectively. The downstream ends of the three independent exhaust passage members 64 are connected to the upstream end of the upstream collective exhaust passage member 65. The upstream collective exhaust passage member 65 gathers (merges) flows of the exhaust gas discharged from the three independent exhaust passage members 64. The downstream end of the upstream collective exhaust passage member 65 is connected to the upstream end of the catalyst portion 62. The catalyst portion 62 includes a main catalyst 62a which is configured to purify exhaust gas. The downstream end of the catalyst portion 62 is connected to the upstream end of the downstream exhaust passage member 66. The downstream end of the downstream exhaust passage member 66 is connected to the upstream end of the muffler member 67. The muffler member 67 has an atmosphere discharge port 67a exposed to the atmosphere. The exhaust gas discharged from the three exhaust ports 34b of the engine main body 20 passes the upstream exhaust passage member 61 and flows into the catalyst portion 62. After the exhaust gas is purified while passing through the main catalyst 62a, the exhaust gas passes the downstream collective exhaust passage member 63 and is discharged from the atmosphere discharge port 67a. The independent exhaust passage member 64 is equivalent to an independent exhaust passage member of the present teaching.

A passage member including the internal exhaust passage member 34 and the independent exhaust passage member 64 will be referred to as an independent exhaust passage member 68. One independent exhaust passage member 68 is provided for each combustion chamber 30. Furthermore, a passage from the combustion chamber 30 to the atmosphere discharge port 67a will be referred to as an exhaust path 69. The engine unit 11 is provided with three exhaust paths 69. The exhaust path 69 is a space in which the exhaust gas discharged from one combustion chamber 30 passes. The exhaust path 69 is formed of the independent exhaust passage member 68, the upstream collective exhaust passage member 65, the catalyst portion 62, and the downstream collective exhaust passage member 63. To put it differently, the exhaust path 69 is formed of the internal exhaust passage member 34, the upstream exhaust passage member 61, the catalyst portion 62, and the downstream collective exhaust passage member 63.

The following will describe the exhaust device 60 in a further detailed manner. As shown in FIG. 3, FIG. 4, and FIG. 8, the exhaust device 60 includes first to third exhaust pipes 56A, 56B, and 56C, a collective member 57, a collective exhaust pipe 58, and a muffler member 67. The first to third exhaust pipes 56A, 56B, and 56C are provided in this order from right to left. The upstream ends of the first to third exhaust pipes 56A, 56B, and 56C are connected to the three exhaust ports 34b of the engine main body 20, respectively.

The first to third exhaust pipes 56A, 56B, and 56C are circular pipes. Mounting flange portions 56Af, 56Bf, and 56Cf are provided around the upstream ends of the first to third exhaust pipes 56A, 56B, and 56C. Each of the mounting flange portions 56Af, 56Bf, and 56Cf is plate-shaped. Each of the mounting flange portions 56Af, 56Bf, and 56Cf has a bolt hole to which a bolt is inserted. A part of the first exhaust pipe 56A, which is upstream of the mounting flange portion 56Af, is inserted into the internal exhaust passage member 34. The same applies to the second exhaust pipe 56B and the third exhaust pipe 56C. Each of the mounting flange portions 56Af, 56Bf, and 56Cf is in contact with the outer surface of the engine main body 20. Each of the mounting flange portions 56Af, 56Bf, and 56Cf is fixed to the outer surface of the engine main body 20 by a bolt.

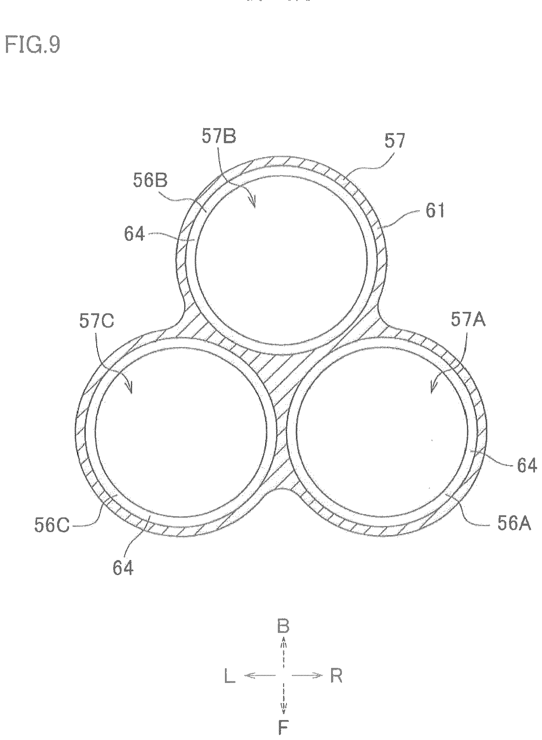

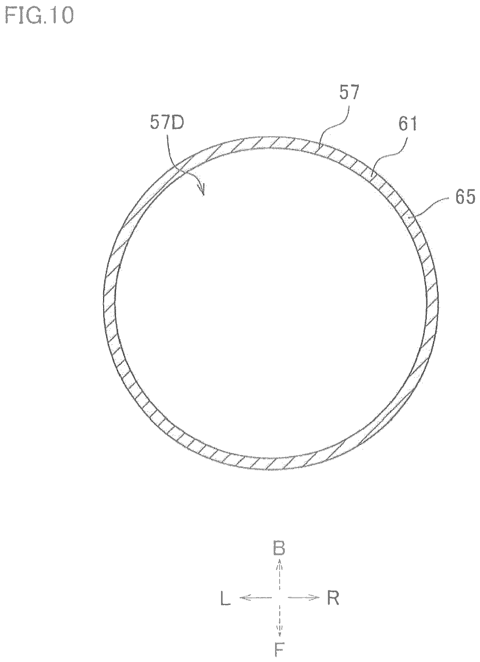

The downstream ends of the first to third exhaust pipes 56A, 56B, and 56C are connected to the collective member 57. As shown in FIG. 9, in a cross-section of an upper part of the collective member 57 cut along the direction orthogonal to the flow direction of the exhaust gas, the inside of the collective member 57 is divided into three spaces 57A, 57B, and 57C. The end portions of the first to third exhaust pipes 56A, 56B, and 56C are fitted into these spaces 57A, 57B, and 57C, respectively. The downstream ends of the spaces 57A, 57B, and 57C are downstream of the downstream ends of the first to third exhaust pipes 56A, 56B, and 56C. Furthermore, as shown in FIG. 10, in a cross-section of a lower part of the collective member 57 cut along the direction orthogonal to the flow direction of the exhaust gas, a single space 57D is provided inside the collective member 57. The total capacity of the internal space of the collective member 57 decreases toward the downstream. In FIG. 9 and FIG. 10, among the arrows indicating directions, solid arrows indicate directions in parallel to the plane of a figure, whereas dotted arrows indicate directions not in parallel to the plane of a figure.

The collective member 57 includes a wall portion forming the space 57A, a wall portion forming the space 57B, a wall portion forming the space 57C, and a wall portion forming the space 57D. The first exhaust pipe 56A and the wall portion forming the space 57A of the collective member 57 constitute an independent exhaust passage member 64A (see FIG. 4). The independent exhaust passage member 64A, however, does not include a part of the first exhaust pipe 56A, which is upstream of the mounting flange portion 56Af. The second exhaust pipe 56B and the wall portion forming the space 57B of the collective member 57 constitute an independent exhaust passage member 64B (see FIG. 4). The independent exhaust passage member 64B, however, does not include a part of the second exhaust pipe 56B, which is upstream of the mounting flange portion 56Bf. The third exhaust pipe 56C and the wall portion forming the space 57C of the collective member 57 constitute an independent exhaust passage member 64C (see FIG. 4). The independent exhaust passage member64C, however, does not include a part of the third exhaust pipe 56C, which is upstream of the mounting flange portion 56Cf. The independent exhaust passage members 64 collectively indicate the independent exhaust passage members 64A, 64B, and 64C.

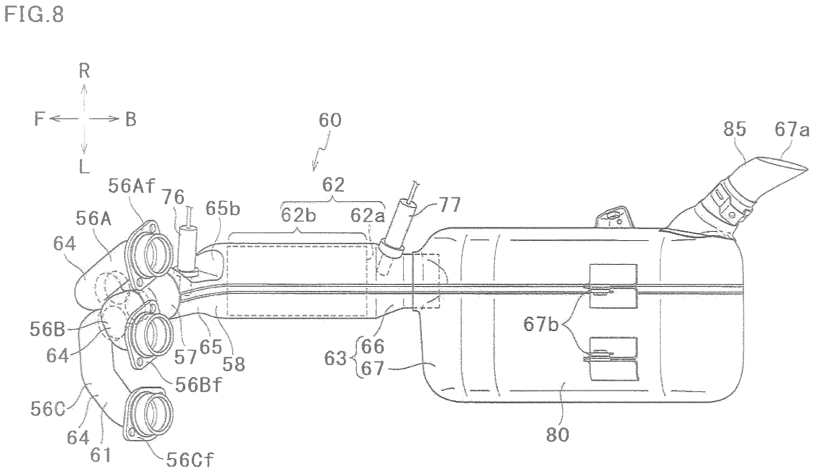

The downstream end of the collective member 57 is connected to the collective exhaust pipe 58. The collective exhaust pipe 58 is a pipe which is substantially circular in cross-section. As shown in FIG. 8, the collective exhaust pipe 58 is formed by welding the left and right components. The main catalyst 62a is provided in the collective exhaust pipe 58. A part of the collective exhaust pipe 58, where the main catalyst 62a is provided, is referred to as a cylindrical part 62b. The catalyst portion 62 includes the cylindrical part 62b and the main catalyst 62a. The upstream collective exhaust passage member 65 is constituted of a part of the collective member 57 forming the space 57D and a part of the collective exhaust pipe 58 which is upstream of the main catalyst 62a.

The downstream end of the collective exhaust pipe 58 is connected to the muffler member 67. To be more specific, the downstream end of the collective exhaust pipe 58 is provided in the muffler member 67. The downstream exhaust passage member 66 is constituted of a part of the collective exhaust pipe 58, which is downstream of the main catalyst 62a. The downstream exhaust passage member 66, however, does not include a part of the collective exhaust pipe 58, which is provided in the muffler member 67.

Each of the three independent exhaust passage members 64 is provided with a plurality of bended portions. The three independent exhaust passage members 64 have the bended portions so that differences between the three independent exhaust passage members 64 in path length are small. At least one of the bended portions of one independent exhaust passage member 64 is bended when viewed in the left-right direction. At least one of the bended portions of one independent exhaust passage member 64 is bended when viewed in the front-rear direction. At the upstream ends of the three independent exhaust passage members 64, the flow directions of the exhaust gas are in parallel to one another.

As shown in FIG. 3, when viewed in the left-right direction, at the upstream ends of the three independent exhaust passage members 64, the flow directions of the exhaust gas are forward and obliquely downward. It is assumed that an axial line passing the center of the upstream end of an independent exhaust passage member 64A including a part of the first exhaust pipe 56A when viewed in the left-right direction is a central axis C1. The direction of the central axis C1 is identical to the flow direction of the exhaust gas at the upstream end of the independent exhaust passage member 64A. An inclination angle of the central axis C1 with respect to the front-rear direction is referred to as an inclination angle θ1. The inclination angle θ1 is not limited to the angle shown in FIG. 3. The inclination angle θ1 is 0 degrees or greater than 0 degrees and 45 degrees or less than 45 degrees. The central axis C1 therefore is along the front-rear direction. In other words, when viewed in the left-right direction, at the upstream ends of the three independent exhaust passage members 64, the flow directions of the exhaust gas are along the front-rear direction. Furthermore, when viewed in the front-rear direction, the flow directions of the exhaust gas at the upstream ends of the three independent exhaust passage members 64 are substantially in parallel to the up-down direction. Due to this, at the upstream ends of the three independent exhaust passage members 64, the flow directions of the exhaust gas are along the front-rear direction.

When viewed in the left-right direction, the flow directions of the exhaust gas at the downstream ends of the three independent exhaust passage members 64 are obliquely rearward and downward. It is assumed that an axial line passing the center of the downstream end of the independent exhaust passage member 64A including a part of the first exhaust pipe 56A when viewed in the left-right direction is a central axis C2. An inclination angle of the central axis C2 with respect to the up-down direction is referred to as an inclination angle θ2. The inclination angle θ2 is not limited to the angle shown in FIG. 3. The inclination angle θ2 is 0 degrees or greater than 0 degrees and 45 degrees or less than 45 degrees. The central axis C2 therefore is along the up-down direction. In other words, when viewed in the left-right direction, at the downstream ends of the three independent exhaust passage members 64, the flow directions of the exhaust gas are along the up-down direction. Furthermore, when viewed in the front-rear direction, the flow directions of the exhaust gas at the downstream ends of the three independent exhaust passage members 64 are substantially in parallel to the up-down direction. Due to this, at the downstream ends of the three independent exhaust passage members 64, the flow directions of the exhaust gas are along the up-down direction.

The upstream collective exhaust passage member 65 includes a bended portion 65a. The bended portion 65a is bended when viewed in the left-right direction. The bended portion 65a is formed in the collective exhaust pipe 58. The bended portion 65a is formed at around the downstream end of the upstream collective exhaust passage member 65. When viewed in the left-right direction, the flow direction of exhaust gas at a part of the upstream collective exhaust passage member 65, which is upstream of the bended portion 65a, is substantially in parallel to the central axis C2. When viewed in the front-rear direction, the flow direction of exhaust gas at the part of the upstream collective exhaust passage member 65, which is upstream of the bended portion 65a, is substantially in parallel to the up-down direction. Due to this, the flow direction of exhaust gas at the part of the upstream collective exhaust passage member 65, which is upstream of the bended portion 65a, is along the up-down direction.

The central axis of the catalyst portion 62 is referred to as a central axis C3. When viewed in the left-right direction, an axis which passes the center of a part of the upstream exhaust passage member 61, which is downstream of the bended portion 65a, is coaxial with the central axis C3. When viewed in the left-right direction, the central axis C3 is along the front-rear direction. When viewed in the left-right direction, an inclination angle of the central axis C3 with respect to the front-rear direction is termed as θ3 (not illustrated). The inclination angle θ3 is substantially 0 degrees. When viewed in the left-right direction, the central axis C3 is substantially in parallel to the front-rear direction. The inclination angle θ3 may be larger than 0 degrees. The inclination angle θ3 is preferably 0 degrees or greater than 0 degrees and 45 degrees or less than 45 degrees. Although not illustrated, when viewed in the up-down direction, the central axis C3 is substantially in parallel to the front-rear direction. The central axis C3 therefore is along the front-rear direction. Due to this, the flow direction of exhaust gas at the part of the upstream collective exhaust passage member 65, which is downstream of the bended portion 65a, is along the front-rear direction. The bended portion 65a changes the flow direction of the exhaust gas flowing therein, from the direction along the up-down direction to the direction along the front-rear direction. To be more specific, the bended portion 65a changes the flow direction of the exhaust gas flowing therein, from the direction along the downward direction to the direction along the rearward direction.

As described above, the central axis C3 of the catalyst portion 62 is along the front-rear direction. In other words, the flow direction of the exhaust gas flowing in the catalyst portion 62 is along the front-rear direction. To be more specific, the flow direction of the exhaust gas flowing in the catalyst portion 62 is the direction along the rearward direction. The axis passing the center of the downstream exhaust passage member 66 is coaxial with the central axis C3. Due to this, the flow direction of the exhaust gas flowing in the downstream exhaust passage member 66 is along the front-rear direction. To be more specific, the flow direction of the exhaust gas flowing in the downstream exhaust passage member 66 is the direction along the rearward direction.

The downstream end and its surroundings of the upstream collective exhaust passage member 65 are tapered so that the diameter increases downward. This tapered portion is formed at the bended portion 65a. A recess 65b is formed at around the downstream end of the upstream collective exhaust passage member 65. A part of the recess 65b is formed at the bended portion 65a. A part of the recess 65b is formed upstream of the bended portion 65a. It is assumed that the cross-sectional area of the downstream end and its surroundings of the upstream collective exhaust passage member 65 cut along the direction orthogonal to the flow direction of the exhaust gas is a cross-sectional area A1 (not illustrated). Furthermore, it is assumed that the cross-sectional area of the catalyst portion 62 cut along the direction orthogonal to the flow direction of the exhaust gas is a cross-sectional area A2 (not illustrated). The cross-sectional area A1 is smaller than the cross-sectional area A2. The downstream exhaust passage member 66 is tapered so that the diameter decreases downward. It is assumed that the cross-sectional area of the upstream end and its surroundings of the downstream exhaust passage member 66 cut along the direction orthogonal to the flow direction of the exhaust gas is a cross-sectional area A3 (not illustrated). The cross-sectional area A3 is smaller than the cross-sectional area A2.

When viewed in the front-rear direction, the downstream end portions of the three independent exhaust passage members 64 overlap the oil cooler 46. When viewed in the front-rear direction, the three independent exhaust passage members 64 do not overlap the oil filter 45. When viewed in the front-rear direction, the downstream end portions of the three independent exhaust passage members 64 are provided to the right of the oil filter 45. When the exhaust device 60 and the oil filter 45 are viewed from the front side, the oil filter 45 is exposed. Due to this, the oil filter 45 is easily detachable from the engine main body 20. An operation to replace the oil filter 45 can therefore be easily done. When viewed in the front-rear direction, a part of the exhaust device 60 may overlap the oil filter 45. Even in such a case, the oil filter 45 is easily detachable when compared to cases where the entire oil filter 45 is hidden behind the exhaust device 60. When the exhaust device 60 and the oil filter 45 are viewed from the front side, at least a part of the oil filter 45 is preferably exposed.

When viewed in the left-right direction, a part of the upstream collective exhaust passage member 65 is provided in front of the engine main body 20. When viewed in the front-rear direction, a part of the upstream collective exhaust passage member 65 overlaps the engine main body 20. In other words, a part of the upstream collective exhaust passage member 65 is provided in front of the engine main body 20. To be more specific, a part of the upstream collective exhaust passage member 65 is provided in front of the crankcase member 20a. The upstream collective exhaust passage member 65 is provided below the crankshaft axis Cr.

The muffler member 67 is a device for reducing noise generated by exhaust gas. As shown in FIG. 8, a bracket 67b is provided on the upper surface of the muffler member 67. The bracket 67b is attached to the vehicle body frame 4. In other words, the muffler member 67 is supported by the vehicle body frame 4. The muffler member 67 includes an external cylinder 80 and a tail pipe 85. The external cylinder 80 is formed by welding the left and right components.

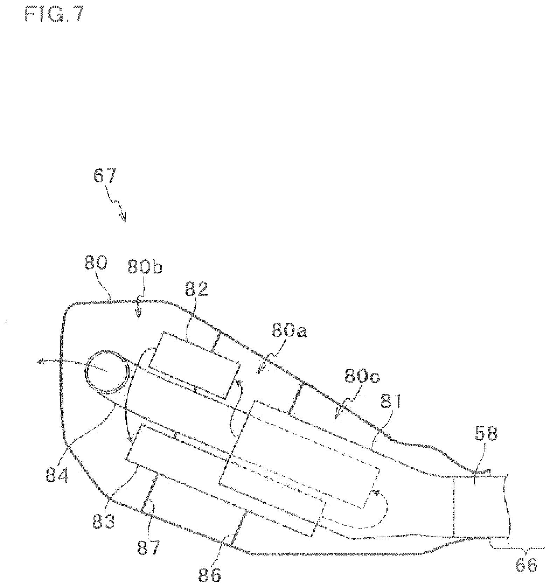

As shown in FIG. 7, the muffler member 67 includes four pipes 81 to 84 housed in the external cylinder 80. The inside of the external cylinder 80 is divided into three expansion chambers 80a, 80b, and 80c by two separators 86 and 87. The first pipe 81 is connected to the downstream end of the collective exhaust pipe 58. A part of the collective exhaust pipe 58, which is inside the external cylinder 80, is included in the muffler member 67. The first pipe 81 allows the collective exhaust pipe 58 to communicate with the central first expansion chamber 80a among the three expansion chambers. The second pipe 82 allows the first expansion chamber 80a to communicate with the second expansion chamber 80b behind the first expansion chamber 80a. The third pipe 83 allows the second expansion chamber 80b to communicate with the third expansion chamber 80c in front of the first expansion chamber 80a. The fourth pipe 84 allows the third expansion chamber 80c to communicate with the tail pipe 85 (see FIG. 8). The fourth pipe 84 is bended inside the second expansion chamber 80b. The tail pipe 85 penetrates the right wall of the second expansion chamber 80b. In the second expansion chamber 80b, the tail pipe 85 is connected to the fourth pipe 84. The opening at the downstream end of the tail pipe 85 is the atmosphere discharge port 67a. The exhaust gas discharged from the collective exhaust pipe 58 passes the first pipe 81, the first expansion chamber 80a, the second pipe 82, the second expansion chamber 80b, the third pipe 83, the third expansion chamber 80c, the fourth pipe 84, and the tail pipe 85 in this order. The exhaust gas is then discharged to the atmosphere through the atmosphere discharge port 67a. A sound absorbing material such as glass wool may or may not be provided between the inner surface of the external cylinder 80 and the outer surfaces of the four pipes 81 to 84. The internal structure of the muffler member 67 is not limited to the structure shown in FIG. 7.

Subsequently, the catalyst portion 62 is further detailed. As shown in FIG. 3, FIG. 4, and FIG. 8, the catalyst portion 62 includes the main catalyst 62a and the cylindrical part 62b. The cylindrical part 62b is connected to the downstream end of the upstream collective exhaust passage member 65 and the upstream end of the downstream exhaust passage member 66. The cylindrical part 62b may be integrally molded with a part of the upstream collective exhaust passage member 65. The cylindrical part 62b may be integrally molded with a part of the downstream exhaust passage member 66. The exhaust device 60 does not include catalysts other than the main catalyst 62a. The main catalyst 62a purifies the exhaust gas most in a plurality of exhaust paths 69 (see FIG. 5).

The main catalyst 62a is formed to be cylindrical. The main catalyst 62a has a porous structure. The porous structure indicates a structure in which through holes are formed along the flow direction of the exhaust gas. The main catalyst 62a is a three-way catalyst. The three-way catalyst removes three substances in exhaust gas, namely hydrocarbon (HC), carbon monoxide (CO), and nitrogen oxide (NOx), by oxidation or reduction. The three-way catalyst is a type of oxidation-reduction catalyst. The main catalyst 62a may be a catalyst which removes one or two of hydrocarbon, carbon monoxide, and nitrogen oxide. The main catalyst 62a may not be an oxidation-reduction catalyst. The main catalyst may be an oxidation catalyst which removes harmful substances only by oxidation. The main catalyst may be a reduction catalyst which removes harmful substances only by reduction. The main catalyst 62a includes a base and catalyst materials attached to the surface of the base. The catalyst materials are formed of a carrier and noble metals. The carrier has a function of attaching noble metals to a base. The noble metal has a function of purifying the exhaust gas. Examples of noble metals include platinum, palladium, and rhodium which remove hydrocarbon, carbon monoxide, and nitrogen oxide, respectively. When the temperature of the main catalyst 62a is lower than a predetermined temperature, the main catalyst 62a is inactive and does not exert the purification performance. When the temperature of the main catalyst 62a is equal to or higher than the predetermined temperature, the main catalyst 62a is active and exerts the purification performance. The main catalyst 62a may be a metal-base catalyst or a ceramic-base catalyst. The metal-base catalyst is a catalyst in which the base is made of metal. The ceramic-base catalyst is a catalyst in which the base is made of ceramic. The base of the metal-base catalyst is formed by, for example, alternately stacking metal corrugated plates and metal flat plates and winding them. The base of the ceramic-base catalyst is, for example, a honeycomb structure body.

The central axis C3 of the catalyst portion 62 is coaxial with the central axis of the main catalyst 62a. The central axis C3 of the catalyst portion 62 indicates the central axis of the cylindrical part 62b. The length in the flow direction of the exhaust gas of the catalyst portion 62 is identical to the length in the flow direction of the exhaust gas of the main catalyst 62a. The center of the upstream end of the main catalyst 62a is identical in position to the center of the upstream end of the catalyst portion 62. The center of the downstream end of the main catalyst 62a is identical in position to the center of the downstream end of the catalyst portion 62. The length in the flow direction of the exhaust gas of the catalyst portion 62 is termed a length Dc1 (not illustrated). Furthermore, the maximum length in the direction orthogonal to the flow direction of the exhaust gas of the catalyst portion 62 is termed Dc2 (not illustrated). The length Dc1 is longer than the length Dc2.

As shown in FIG. 3, a plane which passes the frontmost end of the crankcase member 20a and is orthogonal to the front-rear direction is termed a plane Se1. A plane which passes the rearmost end of the crankcase member 20a and is orthogonal to the front-rear direction is termed a plane Se2. The catalyst portion 62 is provided between the plane Se1 and the plane Se2. When viewed in the left-right direction, a part of the catalyst portion 62 is provided straight below the crankcase member 20a. When viewed in the left-right direction, the catalyst portion 62 may be entirely provided straight below the crankcase member 20a. As shown in FIG. 4, a plane which passes the leftmost end of the engine main body 20 and is orthogonal to the left-right direction is termed a plane Se3. The plane Se3 passes the leftmost end of the crankcase member 20a. A plane which passes the rightmost end of the engine main body 20 and is orthogonal to the left-right direction is termed a plane Se4. The plane Se4 passes the rightmost end of the crankcase member 20a. The catalyst portion 62 is provided between the plane Se3 and the plane Se4. Although not illustrated, the catalyst portion 62 entirely overlaps the crankcase member 20a when viewed in the up-down direction. The catalyst portion 62 is provided straight below the crankcase member 20a. A part of the catalyst portion 62 is provided straight below a part of the oil pan 26. Only a part of the catalyst portion 62 may be provided straight below the crankcase member 20a. At least a part of the catalyst portion 62 is preferably provided straight below the crankcase member 20a.

When viewed in the left-right direction, a part of the catalyst portion 62 is provided in front of the linear line La1. In other words, a part of the catalyst portion 62 is provided forward of the crankshaft axis Cr. The catalyst portion 62 may be provided entirely forward of the crankshaft axis Cr. At least a part of the catalyst portion 62 is preferably provided forward of the crankshaft axis Cr. The catalyst portion 62 may be provided entirely rearward of the crankshaft axis Cr in an Example not covered in the present invention. At least a part of the catalyst portion 62 is preferably provided rearward of the crankshaft axis Cr. The catalyst portion 62 is provided below the crankshaft axis Cr. When viewed in the left-right direction, the catalyst portion 62 is provided in front of the cylinder axial line Cy. Only a part of the catalyst portion 62 may be provided in front of the cylinder axial line Cy. At least a part of the catalyst portion 62 is preferably provided in front of the cylinder axial line Cy. A linear line which is orthogonal to the cylinder axial line Cy and passes the crankshaft axis Cr when viewed in the left-right direction is termed a linear line La2. When viewed in the left-right direction, the catalyst portion 62 is provided entirely behind (straight below) the linear line La2. When viewed in the left-right direction, only a part of the catalyst portion 62 may be provided behind the linear line La2. When viewed in the left-right direction, at least a part of the catalyst portion 62 is preferably provided behind the linear line La2.

When viewed in the left-right direction, the catalyst portion 62 is provided entirely straight below (behind) a linear line Lp. The linear line Lp is an extension of the border line between the crankcase 21 and the oil pan 26 when the engine unit 11 is viewed in the left-right direction. Only a part of the catalyst portion 62 may be provided straight below the linear line Lp. At least a part of the catalyst portion 62 is preferably provided straight below the linear line Lp.

As shown in FIG. 3, a line segment, which is the lowest one of line segments connecting points on the outline of the engine main body 20 with points on the outline of the front wheel unit 2 when viewed in the left-right direction, is referred to as a line segment Lw1. The line segment Lw1 connects the lowermost end of the engine main body 20 with a position in the vicinity of the lowermost end of the front wheel unit 2. When viewed in the left-right direction, a part of the catalyst portion 62 is provided straight above the line segment Lw1 and its extension. A line segment, which is the highest one of line segments connecting points on the outline of the engine main body 20 with points on the outline of the front wheel unit 2 when viewed in the left-right direction, is referred to as a line segment Lw2. The line segment Lw2 connects the uppermost end of the engine main body 20 with the uppermost end of the front wheel unit 2 or a position in the vicinity of the uppermost end of the front wheel unit 2. When viewed in the left-right direction, a part of the catalyst portion 62 is provided in a quadrangle having the line segment Lw1 and the line segment Lw2 as two sides. The quadrangle having the line segment Lw1 and the line segment Lw2 as two sides can be rephrased as a quadrangle in which apexes thereof are the ends of the line segment Lw1 and the ends of the line segment Lw2. When viewed in the left-right direction, a part of the catalyst portion 62 is provided inside the above-described quadrangle and does not overlap the engine main body 20. In other words, when viewed in the left-right direction, a part of the catalyst portion 62 is provided between the engine main body 20 and the front wheel unit 2. Alternatively, when viewed in the left-right direction, the catalyst portion 62 may be entirely provided between the engine main body 20 and the front wheel unit 2. When viewed in the left-right direction, at least a part of the catalyst portion 62 is preferably provided between the engine main body 20 and the front wheel unit 2. When viewed in the left-right direction, the catalyst portion 62 may be provided entirely above the line segment Lw1 and its extension. When the front forks 6 and/or the rear suspension 8 expands and contracts the relative position of the vehicle body frame 4, relative to the front wheel unit 2, is changed. The relative position of the engine unit 11 relative to the front wheel unit 2 is therefore changed. When viewed in the left-right direction, at least a part of the catalyst portion 62 is provided between the engine main body 20 and the front wheel unit 2 as described above. This, however, does not indicate that at least a part of the catalyst portion 62 is always provided in this way irrespective of the position of the engine unit 11 relative to the front wheel unit 2. This indicates that at least a part of the catalyst portion 62 is provided between the engine main body 20 and the front wheel unit 2 when viewed in the left-right direction when the position of the engine unit 11 is within a particular range relative to the front wheel unit 2.

As shown in FIG. 3, a horizontal plane passing the center of the front wheel unit 2 is termed a horizontal plane Sh. The catalyst portion 62 is provided below the horizontal plane Sh. This indicates that the catalyst portion 62 is provided below the horizontal plane Sh when the position of the engine unit 11 is within a particular range relative to the front wheel unit 2.

As shown in FIG. 4, the catalyst portion 62 is disposed at a right part of the motorcycle 1. The center of the upstream end and the center of the downstream end of the catalyst portion 62 are not disposed at the center C0 in the left-right direction of the motorcycle 1. The center of the upstream end and the center of the downstream end of the catalyst portion 62 are to the right of the center C0 in the left-right direction of the motorcycle 1. When viewed in the front-rear direction, the catalyst portion 62 is provided to the right of the center C0 in the left-right direction of the motorcycle 1. When viewed in the front-rear direction, a part of the catalyst portion 62 may be disposed to the right of the center C0 in the left-right direction of the motorcycle 1 and the rest of the catalyst portion 62 may be disposed to the left of the center C0 in the left-right direction of the motorcycle 1.

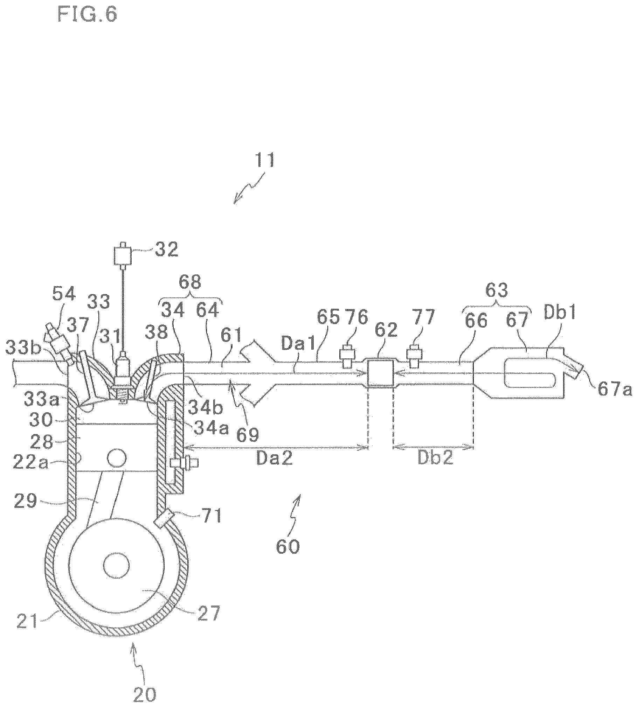

As shown in FIG. 6, an average of path lengths from the combustion chamber 30 to the upstream end of the catalyst portion 62 in the three exhaust paths 69 is termed a path length Da1. The path length from the downstream end of the catalyst portion 62 to the atmosphere discharge port 67a is termed a path length Db1. The path length Da1 is shorter than the path length Db1. An average of path lengths from the exhaust port 34b to the upstream end of the catalyst portion 62 in the three exhaust paths 69 is termed a path length Da2. The path length from the downstream end of the catalyst portion 62 to the upstream end of the muffler member 67 is termed a path length Db2. The path length Da1 is longer than the path length Db2. The path length Da2 is longer than the path length Db2. The path length Da2 may be shorter than the path length Db2. The path length Da1 may be shorter than the path length Db2. The path length in the expansion chamber of the muffler member 67 is defined as below. The path length in the first expansion chamber 80a from the downstream end of the first pipe 81 to the upstream end of the second pipe 82 is taken as an example. This path length is the length of the shortest path from the center of the downstream end of the first pipe 81 to the center of the upstream end of the second pipe 82. In other words, the path length in the expansion chamber in the muffler member 67 is the length of the path connecting the center of the inflow port of the expansion chamber with the center of the outflow port of the expansion chamber in the shortest distance.

As shown in FIG. 3 and FIG. 4, the exhaust device 60 includes an upstream oxygen sensor 76 and a downstream oxygen sensor 77. The upstream oxygen sensor 76 is provided on the upstream collective exhaust passage member 65. The upstream oxygen sensor 76 is configured to detect the oxygen density in the exhaust gas in the upstream collective exhaust passage member 65. The downstream oxygen sensor 77 is provided on the downstream exhaust passage member 66. The downstream oxygen sensor 77 is configured to detect the oxygen density in the exhaust gas in the downstream exhaust passage member 66. The exhaust device 60 may not include the downstream oxygen sensor 77.

The engine unit 11 includes a controller (not illustrated) for controlling operations of the engine unit 11. The controller is connected to sensors 71 to 77. The controller controls the engine unit 11 based on signals from the sensors 71 to 77. The controller controls a fuel injection amount of the injector 54 based on signals from the sensors including the upstream oxygen sensor 76. A signal from the downstream oxygen sensor 77 may be used for controlling the fuel injection amount. Furthermore, the controller determines the purification capability of the main catalyst 62a based on a signal from the downstream oxygen sensor 77. The controller may determine the purification capability of the main catalyst 62a based on a signal of the upstream oxygen sensor 76 and a signal of the downstream oxygen sensor 77. When the controller determines that the purification capability of the main catalyst 62a has become lower than a predetermined level, the controller sends a signal to the display 14.

A warning lamp (not illustrated) of the display 14 is turned on. This prompts the rider to replace the main catalyst 62a. The controller controls an ignition timing which is a timing at which the ignition plug 31 discharges electricity. Furthermore, the controller controls electric conduction to the starter motor (not illustrated) so as to control the start of the engine unit 11.

The motorcycle 1 of the present embodiment having been described above has the following characteristics. At least a part of a catalyst portion 62 is provided straight below the crankcase member 20a. The catalyst portion 62 is provided so that the flow direction of the exhaust gas flowing therein is along the horizontal direction. The direction along the horizontal direction is not limited to the direction in parallel to the horizontal direction. This direction includes a direction tilted by +45 to -45 degrees with respect to the horizontal direction. Furthermore, at least a part of the upstream collective exhaust passage member 65 is provided in front of the engine main body 20. The path length of the upstream collective exhaust passage member 65 is therefore elongated when compared to cases where the upstream collective exhaust passage member 65 is not provided in front of the engine main body 20. The scattering of the exhaust gas in the upstream collective exhaust passage member 65 is therefore facilitated.

The upstream collective exhaust passage member 65 includes a bended portion 65a. The bended portion 65a changes the flow direction of the exhaust gas flowing therein, from the direction along the up-down direction to the horizontal direction. As the flow direction of the exhaust gas is changed by the upstream bended portion 65a which is provided in the upstream collective exhaust passage member 65, the scattering of the exhaust gas in the upstream collective exhaust passage member 65 is facilitated.

As the scattering of the exhaust gas in the upstream collective exhaust passage member 65 is facilitated, deviation of a position where the exhaust gas passes the main catalyst 62a is restrained. Accordingly, as compared with cases where the position is deviated, the exhaust gas purification performance of the main catalyst 62a is improved while the size of the main catalyst 62a is maintained. Due to this, the exhaust gas purification performance of the main catalyst 62a is further improved while the increase in size of the motorcycle 1 in the up-down direction is restrained.

The engine main body 20 is provided so that the cylinder axial lines Cy are along the up-down direction. As described above, at least a part of the catalyst portion 62 is provided straight below the crankcase member 20a of this engine main body 20. Due to this, the path length of the upstream collective exhaust passage member 65 is long when compared to cases where the engine main body 20 is provided so that the cylinder axial line Cy is along the front-rear direction. The scattering of the exhaust gas in the upstream collective exhaust passage member 65 is therefore facilitated. As a result, deviation of a position where the exhaust gas passes the main catalyst 62a is further restrained. Accordingly, when compared to cases where the position is deviated, the exhaust gas purification performance of the main catalyst 62a is improved while the size of the main catalyst 62a is maintained. Due to this, the exhaust gas purification performance of the main catalyst 62a is further improved while the increase in size of the motorcycle 1 in the up-down direction is restrained.

At least a part of the catalyst portion 62 is provided forward of the crankshaft axis Cr. Due to this, the position of the catalyst portion 62 is further forward when compared to cases where the entirety of the catalyst portion 62 is provided rearward of the crankshaft axis Cr. The path length Da 1 from the combustion chamber 30 to the catalyst portion 62 is therefore shortened. For this reason, the temperature of the exhaust gas flowing into the main catalyst 62a is further increased. As a result, at the cold start of the engine unit 11, the time required to activate the deactivated main catalyst 62a is further shortened. Due to this, the exhaust gas purification performance of the main catalyst 62a is further improved.

When viewed in the left-right direction, at least a part of the catalyst portion 62 is provided behind the linear line La2. The linear line La2 is a linear line which is orthogonal to the cylinder axial line Cy and passes the crankshaft axis Cr when viewed in the left-right direction. Due to this, the path length of the upstream collective exhaust passage member 65 is long when compared to cases where the entirety of the catalyst portion 62 is provided in front of the linear line La2. The scattering of the exhaust gas in the upstream collective exhaust passage member 65 is therefore facilitated. As a result, deviation of a position where the exhaust gas passes the main catalyst 62a is further restrained. Accordingly, when compared to cases where the position is deviated, the exhaust gas purification performance of the main catalyst 62a is improved while the size of the main catalyst 62a is maintained. Due to this, the exhaust gas purification performance of the main catalyst 62a is further improved while the increase in size of the motorcycle 1 in the up-down direction is restrained.

### (Modification 1)

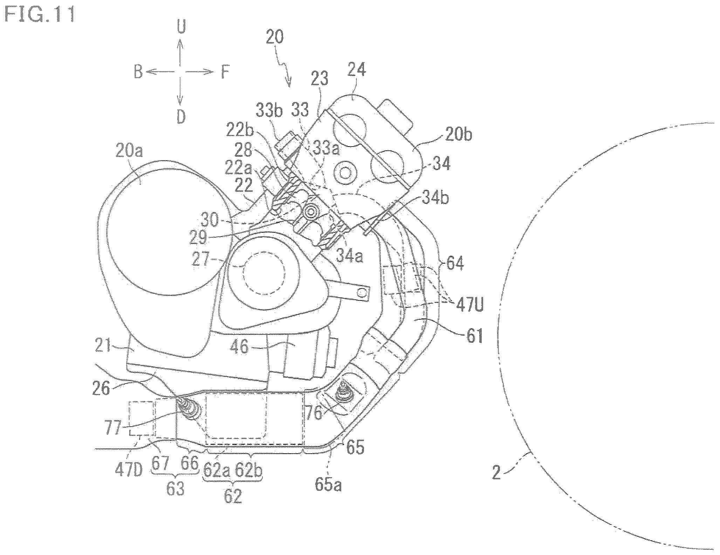

FIG. 11 is a right side view of a part of an engine unit of Modification 1 of the First Embodiment. In Modification 1, members identical to those in the First Embodiment above are indicated by the same reference numerals and detailed descriptions thereof are omitted.

As shown in FIG. 11, an engine unit of Modification 1 includes a downstream sub-catalyst 47D and an upstream sub-catalyst 47U. In the following explanations, the upstream sub-catalyst 47U and the downstream sub-catalyst 47D may be collectively termed sub-catalysts 47 (not illustrated).

The upstream sub-catalyst 47U is provided upstream of the catalyst portion 62. The upstream sub-catalyst 47U is provided in the upstream exhaust passage member 61. The upstream sub-catalyst 47U is provided in at least one of the independent exhaust passage members 64. The upstream sub-catalyst 47U may be provided in the upstream collective exhaust passage member 65. The upstream sub-catalyst 47U may be provided in at least one of the internal exhaust passage members 34. The upstream sub-catalyst 47U is provided upstream of the upstream oxygen sensor 76. The upstream sub-catalyst 47U is provided upstream of the bended portion 65a.

The downstream sub-catalyst 47D is provided downstream of the catalyst portion 62. The downstream sub-catalyst 47D is provided in the downstream collective exhaust passage member 63. The downstream sub-catalyst 47D is provided in the muffler member 67. The downstream sub-catalyst 47D may be provided in the downstream exhaust passage member 66. The downstream sub-catalyst 47D is provided downstream of the downstream oxygen sensor 77.

The sub-catalysts 47 are configured to purify the exhaust gas. The sub-catalysts 47 include a catalyst material which is identical to that in the main catalyst 62a. The sub-catalysts 47 may have a porous structure in the same manner as the main catalyst 62a. The sub-catalysts 47 may not have a porous structure. The following is an example of a sub-catalyst 47 which does not have a porous structure. For example, the sub-catalyst 47 solely includes a catalyst material which is adhered to the inner surface of the downstream collective exhaust passage member 63. In this case, the base to which the catalyst material of the sub-catalyst 47 is adhered is the downstream collective exhaust passage member 63. The following is another example of a sub-catalyst 47 which does not have a porous structure. For example, a sub-catalyst 47 is structured by arranging a catalyst material to be adhered to a plate-shaped base. The cross-sectional shape of the plate-shaped base cut along the direction orthogonal to the flow direction of the exhaust gas is, for example, circular, C-shaped, or S-shaped.

According to Modification 1, the main catalyst 62a purifies the exhaust gas most in the plurality of exhaust paths 69. In other words, the main catalyst 62a purifies the exhaust gas discharged from the combustion chamber 30 in the exhaust paths 69 more than the sub-catalysts 47. To put it differently, the degree of the contribution of the sub-catalysts 47 to the purification of the exhaust gas is lower than that of the main catalyst 62a. The degree of the contribution to the purification of each of the main catalyst 62a, the upstream sub-catalyst 47U, and the downstream sub-catalyst 47D may be measured by the following method.

The engine unit of Modification 1 is driven and, in a warm-up state, the density of harmful substances in the exhaust gas discharged from the atmosphere discharge port 67a is measured. The warm-up state indicates a state in which the temperature of the engine main body 20 is sufficiently high. The method of measuring the exhaust gas is in compliance with European regulations. When the engine unit is in the warm-up state, the main catalyst 62a and the sub-catalysts 47 are hot and activated. The main catalyst 62a and the sub-catalysts 47 can therefore sufficiently exert their purification performances in the warm-up state.

Subsequently, the downstream sub-catalyst 47D is detached from the engine unit of Modification 1 and only the base of the downstream sub-catalyst 47D is provided in place of the downstream sub-catalyst 47D. The engine unit in this state is assumed to be a measurement engine unit A. This measurement engine unit A is driven, and the density of harmful substances in the exhaust gas discharged from the atmosphere discharge port 67a is measured in the warm-up state.

The downstream sub-catalyst 47D may be arranged such that the catalyst material is directly adhered to the inner surface of the downstream collective exhaust passage member 63. In this case, "only the base of the downstream sub-downstream sub-catalyst 47D is provided" indicates that no catalyst material is adhered to the inner surface of the downstream collective exhaust passage member 63.

Subsequently, the main catalyst 62a is detached from the measurement engine unit A, and only the base of the main catalyst 62a is provided in place of the main catalyst 62a. The engine unit in this state is assumed to be a measurement engine unit B. This measurement engine unit B is driven, and the density of harmful substances in the exhaust gas discharged from the atmosphere discharge port 67a is measured in the warm-up state.

Subsequently, the upstream sub-catalyst 47U is detached from the measurement engine unit B, and only the base of the upstream sub-catalyst 47U is provided in place of the upstream sub-catalyst 47U. The engine unit in this state is assumed to be a measurement engine unit C. This measurement engine unit C is driven, and the density of harmful substances in the exhaust gas discharged from the atmosphere discharge port 67a is measured in the warm-up state.

The measurement engine unit C includes neither the main catalyst 62a nor the sub-catalysts 47. The measurement engine unit B includes the upstream sub-catalyst 47U but does not include the main catalyst 62a and the downstream sub-catalyst 47D. The measurement engine unit A includes the main catalyst 62a and the upstream sub-catalyst 47U but does not include the downstream sub-catalyst 47D. Due to this, the degree of the contribution to the purification of the downstream sub-catalyst 47D is calculated from a difference between a measurement result of the engine unit of Modification 1 and a measurement result of the measurement engine unit A. Furthermore, the degree of the contribution to the purification of the main catalyst 62a is calculated from a difference between a measurement result of the measurement engine unit A and a measurement result of the measurement engine unit B. Furthermore, the degree of the contribution to the purification of the upstream sub-catalyst 47U is calculated from a difference between a measurement result of the measurement engine unit B and a measurement result of the measurement engine unit C.

The main catalyst 62a purifies the exhaust gas most in the plurality of exhaust paths 69. As long as this condition is satisfied, the purification capability of the sub-catalysts 47 may be lower than or higher than the purification capability of the main catalyst 62a. A state in which the purification capability of the sub-catalysts 47 is lower than the purification capability of the main catalyst 62a indicates the following state. That is to say, the exhaust gas discharged from the atmosphere discharge port 67a when only a sub-catalyst is provided is purified more than the exhaust gas discharged from the atmosphere discharge port 67a when only the main catalyst 62a is provided.

The upstream catalyst deteriorates more rapidly than the downstream catalyst. For this reason, when hours of use become high, the magnitude correlation between the degree of the contribution to the purification of the main catalyst 62a and the degree of the contribution to the purification of the downstream sub-catalyst 47D may be reversed. For this reason, the state in which the degree of the contribution to the purification of the main catalyst 62a is higher than that of the downstream sub-catalyst 47D is defined as below. That is to say, this state is a state in which, when the running distance has not reached a predetermined distance (e.g., 1 000km), the degree of the contribution to the purification of the main catalyst 62a is higher than that of the downstream sub-catalyst 47D.

The volume of the main catalyst 62a is preferably larger than the volume of the sub-catalyst 47. The surface area of the main catalyst 62a is preferably larger than the surface area of the sub-catalyst 47. The amount of noble metals in the main catalyst 62a is preferably larger than the amount of noble metals in the sub-catalyst.

The engine unit may include only one of the upstream sub-catalyst 47U and the downstream sub-catalyst 47D. In such a case, the degree of the contribution to purification can be calculated by a method which is a modification of the method above.

According to Modification 1, with the downstream sub-catalyst 47D, the main catalyst 62a is downsized while the exhaust gas purification performance is maintained, when compared to cases where the downstream sub-catalyst 47D is not provided. Due to this, the exhaust gas purification performance of the catalyst (62a, 47D) is improved while the increase in size of the motorcycle 1 in the up-down direction is further restrained. In addition, with the upstream sub-catalyst 47U, the main catalyst 62a is downsized while the exhaust gas purification performance is maintained, when compared to cases where the upstream sub-catalyst 47U is not provided. Due to this, the exhaust gas purification performance of the catalyst (62a, 47U) is improved while the increase in size of the motorcycle 1 in the up-down direction is further restrained.

When the upstream sub-catalyst 47U has a porous structure the upstream sub-catalyst 47U functions as a resistance against the flow of the exhaust gas. It is therefore possible to reduce the flow speed of the exhaust gas upstream of the upstream sub-catalyst 47U. The scattering of the exhaust gas in the upstream collective exhaust passage member 65 is therefore facilitated. As a result, deviation of a position where the exhaust gas passes the main catalyst 62a is further restrained. Accordingly, when compared to cases where the position is deviated, the exhaust gas purification performance of the main catalyst 62a is improved while the size of the main catalyst 62a is maintained. Due to this, the exhaust gas purification performance of the main catalyst 62a is further improved while the increase in size of the motorcycle 1 in the up-down direction is restrained.

### (Modification 2)

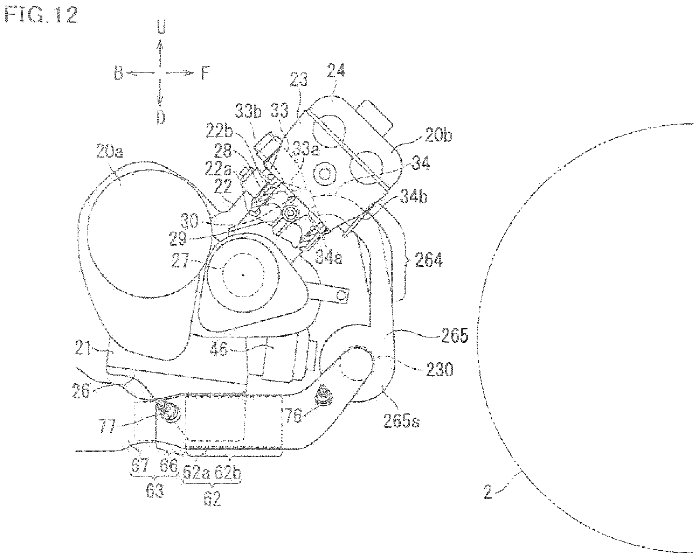

FIG. 12 is a right side view of a part of an engine unit of Modification 2 of the First Embodiment. In Modification 2, members identical to those in the First Embodiment above are indicated by the same reference numerals and detailed descriptions thereof are omitted.

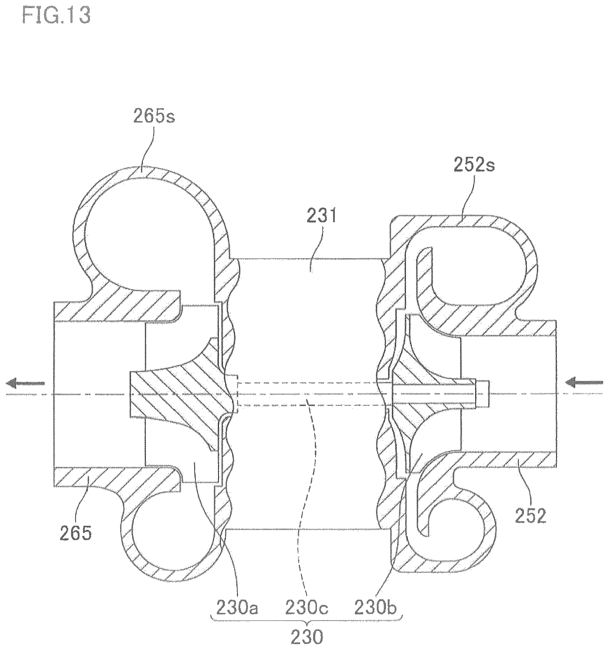

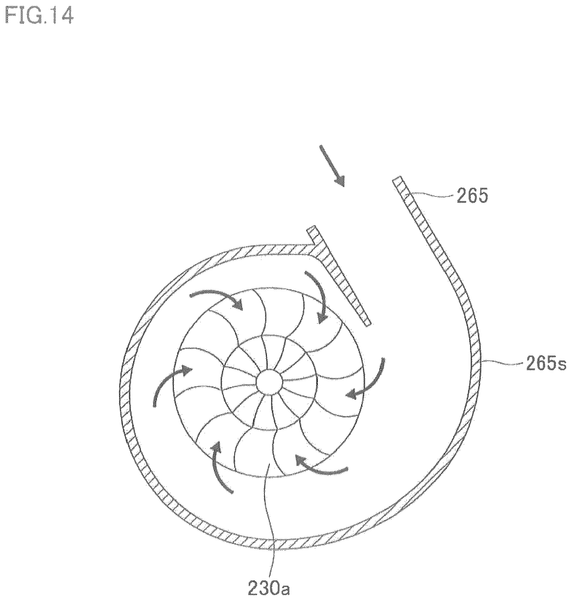

As shown in FIG. 12, an engine unit of Modification 2 includes a turbocharger 230. As shown in FIG. 13, the turbocharger 230 includes a turbine wheel 230a, a compressor wheel 230b, and a connecting shaft 230c. The turbine wheel 230a is connected to the compressor wheel 230b via the connecting shaft 230c. The turbine wheel 230a is provided in an upstream collective exhaust passage member 265. The upstream collective exhaust passage member 265 is connected to the downstream ends of three independent exhaust passage members 264. The upstream collective exhaust passage member 265 and the independent exhaust passage members 264 are provided in place of the upstream collective exhaust passage member 65 and the independent exhaust passage members 64 of the First Embodiment above. The compressor wheel 230b is provided in an intake passage member 252. The intake passage member 252 is provided in place of the intake passage member 52 of the First Embodiment above. The connecting shaft 230c is housed in a center housing 231. The center housing 231 is connected to the upstream collective exhaust passage member 265 and the intake passage member 252. The connecting shaft 230c is rotatably supported by the center housing 231. The upstream collective exhaust passage member 265 includes a scroll exhaust passage member 265s. As shown in FIG. 14, the scroll exhaust passage member 265s is formed to surround the outer circumference of the turbine wheel 230a. The intake passage member 252 includes a scroll intake passage member 252s. The scroll intake passage member 252s is formed to surround the outer circumference of the compressor wheel 230b. The exhaust gas in the scroll exhaust passage member 265s is blown onto the outer periphery of the turbine wheel 230a. As a result of this, the turbine wheel 230a rotates. The exhaust gas blown onto the outer periphery of the turbine wheel 230a is discharged from the turbine wheel 230a in the direction along the central axis of the connecting shaft 230c. In accordance with the rotation of the turbine wheel 230a, the compressor wheel 230b rotates. As a result, the compressor wheel 230b sucks air in the direction along the central axis of the connecting shaft 230c. The sucked air is compressed by the compressor wheel 230b. The compressed air is discharged from the outer periphery of the compressor wheel 230b to the scroll intake passage member 252s.

According to Modification 2, compressed air is supplied to the combustion chamber 30 thanks to the turbocharger 230. The intake efficiency is therefore improved. As a result, the output of the engine is improved. Furthermore, because compressed air is supplied to the combustion chamber 30, the cubic capacity of the engine main body 20 can be decreased. The fuel consumption is therefore decreased. Furthermore, the engine main body 20 is downsized. It is therefore possible to further restrain the increase in size of the vehicle in the up-down direction.

The scroll exhaust passage member 265s shown in FIG. 13 is of a single-scroll type in which only one port is provided to introduce exhaust gas. The scroll exhaust passage member may be of a twin-scroll type in which two ports are provided to introduce exhaust gas. The following will describe this with the assumption that the number of combustion chambers 30 is two. The twin-scroll-type scroll exhaust passage member includes a first scroll passage member and a second scroll passage member. The first scroll passage member and the second scroll passage member are formed in two independent exhaust passage members 264, respectively. The turbine wheel 230a is provided in an upstream collective exhaust passage member 265. The first scroll passage member and the second scroll passage member are arranged to be side by side in the direction along the central axis of the connecting shaft 230c. The exhaust gas in the first scroll passage member and the exhaust gas in the second scroll passage member are blown onto the outer periphery of the turbine wheel 230a. The flows of the exhaust gas discharged from the two scroll passage members are gathered (merged) when passing the turbine wheel 230a. With the twin-scroll-type scroll exhaust passage member, the path length of the independent exhaust passage member 264 is elongated. Due to this, it is possible to prevent the discharge of the exhaust gas from one combustion chamber 30 from being obstructed by the pressure of the exhaust gas discharged from another combustion chamber 30. It is therefore possible to prevent the decrease in the flow rate and pressure of the exhaust gas. The decrease in the output of the engine is prevented for this reason. Furthermore, because the decrease in the flow rate and pressure of the exhaust gas is prevented, the decrease in the rotation speed of the turbine wheel 230a is prevented. The decrease in the intake efficiency is prevented for this reason. When the decrease in the intake efficiency is prevented, the increase in the fuel consumption is prevented and the decrease in the output of the engine is prevented.

When the number of combustion chambers 30 is three or more, the exhaust gas discharged from two or more combustion chambers 30 flows in at least one of the first scroll passage member and the second scroll passage member. For example, when the number of combustion chambers 30 is four, only the exhaust gas discharged from two combustion chambers 30 flows in each scroll passage member. In this case, the exhaust gas discharged from the two combustion chambers 30 is gathered while the exhaust gas flows from the two combustion chambers 30 to the first scroll passage member. Similarly, the exhaust gas discharged from the two combustion chambers 30 is gathered while the exhaust gas flows from the remaining two combustion chambers 30 to the second scroll passage member. The upstream end of an exhaust passage member which gathers exhaust gas discharged from the two combustion chambers 30 may be provided inside the engine main body 20 or outside the engine main body 20.

### (Example)

The following will describe an Example not covered by the present invention. In the Example a straddled vehicle is embodied as a scooter-type motorcycle. The definitions of the front-rear direction, the up-down direction, and the left-right direction are identical to the definitions in the First Embodiment covered by the present invention.

### [Overall Structure of Motorcycle]

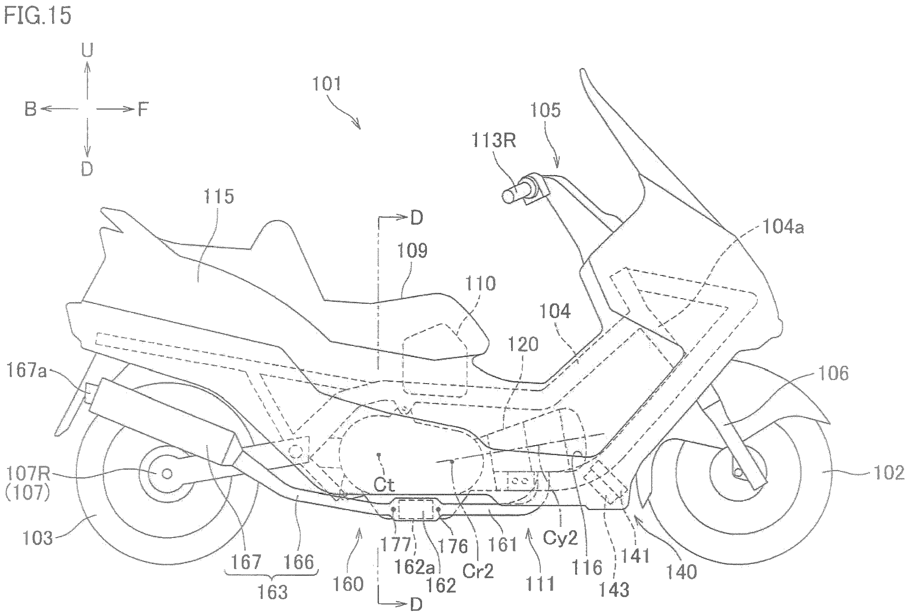

As shown in FIG. 15 showing an Example not covered by the present invention, a motorcycle 101 is provided with a front wheel unit 102, a rear wheel unit 103, and a vehicle body frame 104. The vehicle body frame 104 includes a head pipe 104a at a front portion. A steering shaft (not illustrated) is rotatably inserted into the head pipe 104a. An upper end portion of the steering shaft is connected to a handle unit 105. An upper end portion of a pair of front forks 106 is fixed to the handle unit 105. The lower end portions of the front forks 106 support the front wheel unit 102. The front wheel unit 102 includes a single front wheel. An upper part of the front wheel unit 102 is covered with a fender. This fender is not included in the front wheel unit 102.

The handle unit 105 includes a right grip 113R and a left grip (not illustrated). The left grip 113R is a throttle grip for adjusting the output of the engine. Various types of switches are provided on the handle unit 105. A display (not illustrated) is provided in front of the handle unit 105.

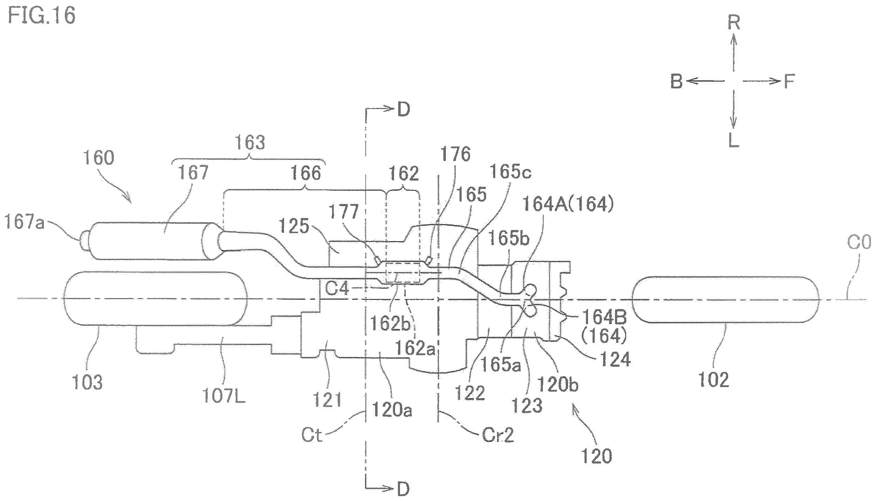

The vehicle body frame 104 supports a seat 109 and a fuel tank 110. The fuel tank 110 is provided inside the seat 109. A part of the fuel tank 110 is provided straight below the seat 109. The vehicle body frame 104 supports the engine unit 111. The engine unit 111 is directly connected to the vehicle body frame 104. The engine unit 111 may be indirectly connected to the vehicle body frame 104. The engine unit 111 is provided straight below the fuel tank 110. The engine unit 111 is provided below the upper end of the seat 109. The front wheel unit 102 is provided in front of the engine unit 111 when viewed in the left-right direction. The rear wheel unit 103 is provided behind the engine unit 111 when viewed in the left-right direction. As shown in FIG. 16, the width in the left-right direction of the engine unit 111 is longer than the width in the left-right direction of the front wheel unit 102. The width in the left-right direction of the engine unit engine unit 111 is longer than the width in the left-right direction of the rear wheel unit 103. The vehicle body frame 104 supports a battery (not illustrated). The battery supplies electric power to electronic devices such as a controller (not illustrated) for controlling the engine unit 111 and sensors.

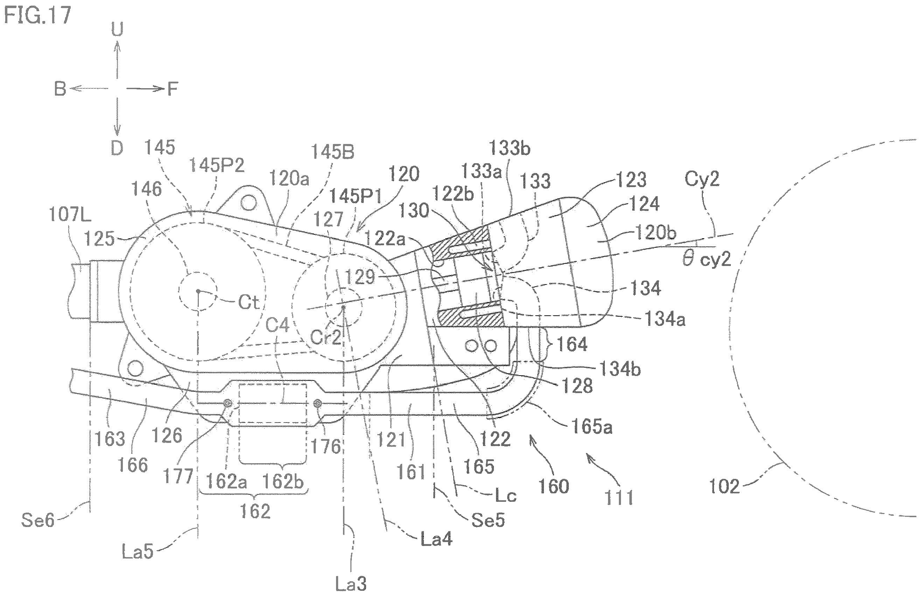

Front end portions of paired left and right swingarms 107 are swingably supported by the vehicle body frame 104. The right swingarm 107R and the left swingarm 107L (see FIG. 16) are asymmetrical in the left-right direction. The front end portions of the paired left and right swingarms 107 may be swingably supported at a rear portion of the engine unit 111. The rear end portions of the swingarms 107 support the rear wheel unit 103. The rear wheel unit 103 includes a single rear wheel. Although not illustrated, a rear suspension is provided between the swingarm 107 and the vehicle body frame 104. FIG. 15 and later-described FIG. 17 show states in which the front fork 106 and the rear suspension 108 are maximally elongated in the up-down direction. In other words, the figures show the states in which the vehicle body frame 104 is at the highest relative to the front wheel unit 102 and the rear wheel unit 103.

The motorcycle 101 is provided with a vehicle body cover 115 which covers the vehicle body frame 104 and the like. The vehicle body cover 115 is constituted of a plurality of cover members. The engine unit 111 is mostly covered with the vehicle body cover 115. The motorcycle 101 is provided with a footrest 116. The footrest 116 is provided below the seat 109 and forward of the seat 109. The vehicle body cover 115 is provided both above and below the footrest 116.

### [Structure of Engine Unit]

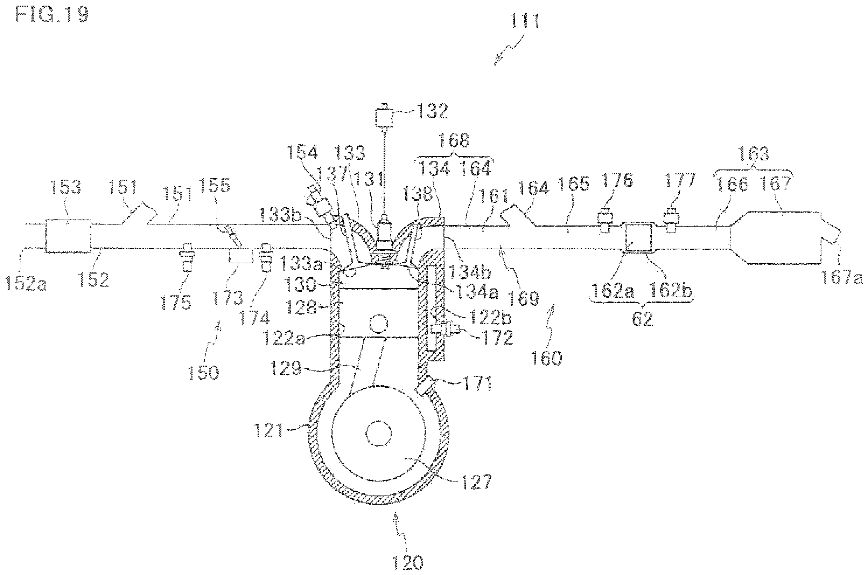

As shown in FIG. 15 showing the Example not covered by the present invention, the engine unit 111 includes an engine main body 120, a water cooling device 140, and an exhaust device 160. Furthermore, as shown in FIG. 19 showing the Example not covered by the present invention, the engine unit 111 further includes an intake device 150. The engine main body 120 is connected to the water cooling device 140, the intake device 150, and the exhaust device 160. The engine unit 111 is a two-cylinder engine having two cylinders. The engine unit 111 is a 4-stroke engine. The combustion process in the two-cylinder engine is performed at different timings in the respective two cylinders. FIG. 19 shows only one of the two cylinders of the engine main body 120 and does not show the remaining cylinder.

The engine unit 111 is a water-cooled engine. The engine main body 120 is cooled by coolant water. To the water cooling device 140, hot coolant water having absorbed heat from the engine main body 120 is supplied from the engine main body 120. The water cooling device 140 decreases the temperature of the coolant water supplied from the engine main body 120 and returns the coolant water to the engine main body 120. The water cooling device 140 includes a radiator 141, a radiator fan 143, and a reserve tank (not illustrated). The radiator 141 is provided in front of the engine main body 120. The radiator fan 143 is provided behind the radiator 141. The engine unit 111 is provided with a water pump (not illustrated) for circulating the coolant water.

### [Structure of Engine Main Body]

As shown in FIG. 16, FIG. 17, and FIG. 18 showing the Example not covered by the present invention, the engine main body 120 includes a crankcase member 120a and a cylinder member 120b. The crankcase member 120a is provided at a rear portion of the engine main body 120. The cylinder member 120b is provided at a front portion of the engine main body 120. The cylinder member 120b is connected to a front end portion of the crankcase member 120a.

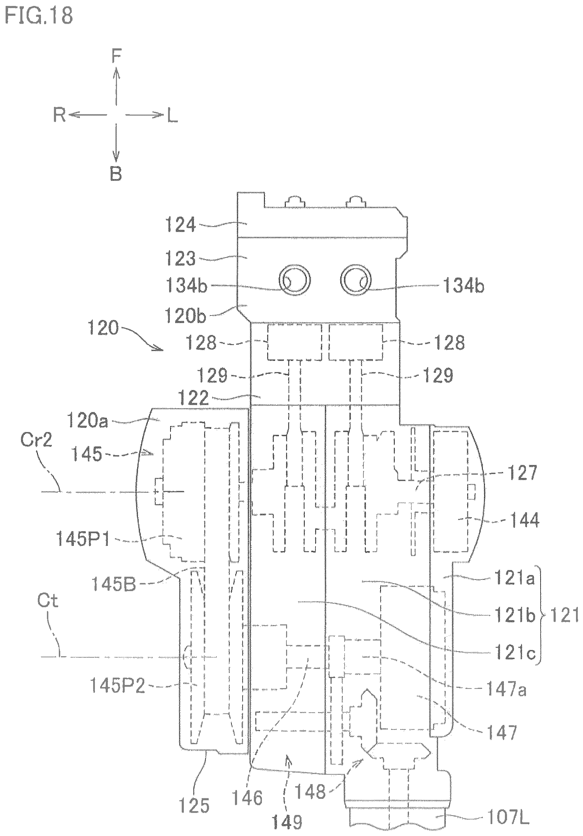

The crankcase member 120a includes a crankcase 121. As shown in FIG. 18, the crankcase 121 includes three parts 121a, 121b, and 121c which are arranged to be side by side along the left-right direction. The left part 121a forms the left surface of the crankcase 121. The left surface of the crankcase member 120a is the left surface of the crankcase 121. The right part 121c forms the right surface of the crankcase 121. To the right of the right surface of the crankcase 121, a transmission case 125 is provided. The right surface of the crankcase member 120a is the right surface of the transmission case 125.

The crankcase member 120a includes a crankshaft 127. Hereinafter, the central axis Cr2 of the crankshaft 127 is referred to as a crankshaft axis Cr2. The crankshaft axis Cr2 is along the left-right direction. To be more specific, the crankshaft axis Cr2 is in parallel to the left-right direction. Most of the crankshaft 127 is housed in the crankcase 121. A right end portion of the crankshaft 127 protrudes from the right surface of the crankcase 121. The right end portion of the crankshaft 127 is housed in the transmission case 125. A power generator 144 is provided at a left end portion of the crankshaft 127. Furthermore, a starter motor (not illustrated) is housed in the crankcase 121. The starter motor and the power generator 144 may be integrated.

The crankcase member 120a includes a continuously variable transmission 145. The continuously variable transmission 145 is provided at the right end portion of the crankshaft 127. The continuously variable transmission 145 is housed in the transmission case 125. The continuously variable transmission 145 includes a driving pulley 145P1, a driven pulley 145P2, and a V belt 145B. The driving pulley 145P1 is attached to the right end portion of the crankshaft 127. The driving pulley 145P1 is rotated by the rotational force of the crankshaft 127. The driven pulley 145P2 is provided behind the driving pulley 145P1. The driven pulley 145P2 is attached to the right end portion of a driven shaft 146. The central axis Ct of the driven shaft 146 is in parallel to the central axis Cr2 of the crankshaft 127. The V belt 145B is provided to wind around the driving pulley 145P1 and the driven pulley 145P2. The V belt 145B transmits the rotational force of the driving pulley 145P1 to the driven pulley 145P2.

A centrifugal clutch 147 is provided at a left end portion of the driven shaft 146. The centrifugal clutch 147 includes a cylindrical output portion 147a. A part of the driven shaft 146 is provided inside the output portion 147a. The centrifugal clutch 147 switches between a state in which the rotational force of the driven shaft 146 is transmitted to the output portion 147a and a state in which it is not transmitted to the output portion 147a, in accordance with the rotation speed of the driven shaft 146. The output portion 147a is connected to a power transmission mechanism 148. The power transmission mechanism 148 is a shaft-drive power transmission mechanism which uses a bevel gear. The power transmission mechanism 148 is connected to a secondary power transmission mechanism (not illustrated). The secondary power transmission mechanism is provided in the left swingarm 107L.A part of the secondary power transmission mechanism is provided at the axle shaft of the rear wheel unit 103. Being similar to the power transmission mechanism 148, the secondary power transmission mechanism is also a shaft-drive power transmission mechanism. Each of the power transmission mechanism 148 and the secondary power transmission mechanism may not be a shaft-drive power transmission mechanism. For example, the power transmission mechanism 148 may include a plurality of shaft members arranged to be in parallel to the left-right direction and a plurality of gears. In such a case, the secondary power transmission mechanism may include a plurality of shaft members arranged to be in parallel to the left-right direction, a plurality of pulleys, and a belt. Alternatively, the secondary power transmission mechanism may include a plurality of shaft members arranged to be in parallel to the left-right direction, a plurality of sprockets, and a chain.

The continuously variable transmission 145, the centrifugal clutch 147, and the power transmission mechanism 148 are included in a power transmission apparatus 149. The power transmission apparatus 149 transmits the rotational force of the crankshaft 127 to the rear wheel unit 103. The driving pulley 145P1 is equivalent to a driving rotator of the present teaching. The driven pulley 145P2 is equivalent to a driven rotator of the present teaching. The V belt 145B is equivalent to a winding member of the present teaching. The continuously variable transmission 145 may include sprockets in place of the pulleys 145P1 and 145P2. In such a case, the continuously variable transmission 145 includes a chain in place of the V belt 145B.

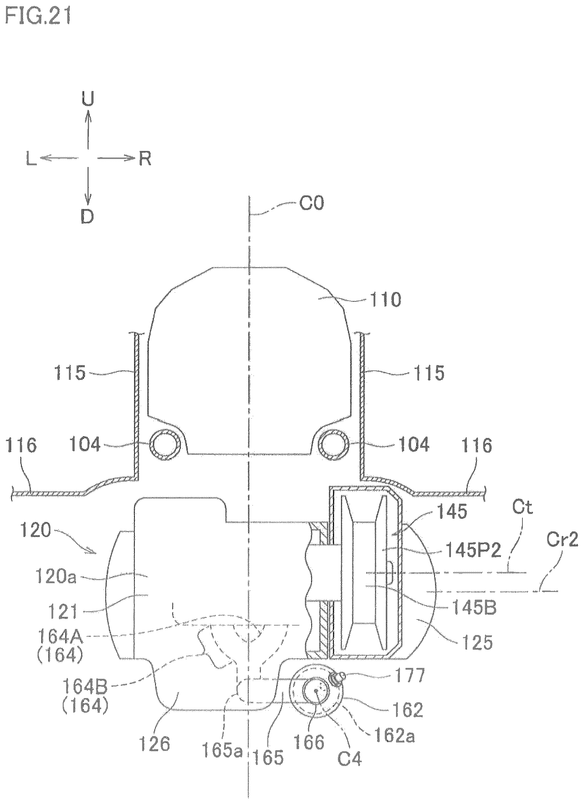

As shown in FIG. 21 showing the Example not covered by the present invention, an oil storage 126 is formed at a lower part of the crankcase 121. FIG. 21 is a cross-section taken along a line D-D in FIG. 15 and FIG. 16. In FIG. 21, a part of the internal structure in the cross-section of the engine main body 20 is omitted. The oil storage 126 is provided at a left part of the crankcase 121. The lower end of the left part of the crankcase member 120a is therefore above the lower end of the right part of the crankcase member 120a. A part of the exhaust device 160 is provided straight below the right part of the crankcase member 120a. The oil storage 126 stores lubrication oil.

As shown in FIG. 16 showing the Example not covered by the present invention, the cylinder member 120b includes a cylinder body 122, a cylinder head 123, and a head cover 124. The cylinder body 122 is connected to an upper end portion of the crankcase 121. The cylinder head 123 is connected to an upper end portion of the cylinder body 122. The head cover 124 is connected to an upper end portion of the cylinder head 123.

As shown in FIG. 17 and FIG. 19 showing the Example not covered by the present invention, cylinder holes 122a are formed in the cylinder body 122. Two cylinder holes 122a are formed in the cylinder body 122. The two cylinder holes 122a are side by side in the left-right direction. A piston 128 is slidably housed in each cylinder hole 122a. The two pistons 128 are connected to a single crankshaft 127 via two connecting rods 129. Around the two cylinder holes 122a, a cooling passage 122b is formed to allow the coolant water to flow therein.

Hereinafter, the central axis Cy2 of the cylinder hole 122a is referred to as a cylinder axial line Cy2. The two cylinder axial lines Cy2 are in parallel to one another. When viewed in the left-right direction, the two cylinder axial lines Cy2 overlap each other. As shown in FIG. 17, the cylinder axial lines Cy2 do not intersect with the crankshaft axis Cr2. The cylinder axial lines Cy2 may intersect with the crankshaft axis Cr2. The cylinder axial lines Cy2 is along the front-rear direction. When viewed in the left-right direction, each cylinder axial lines Cy2 is inclined in the up-down direction with respect to the front-rear direction. In other words, the cylinder axial line Cy2 is inclined with a positive slope in the forward direction. When viewed in the left-right direction, an inclination angle of the cylinder axial line Cy2 with respect to the front-rear direction is termed an inclination angle θcy2. The inclination angle θcy2 is not limited to the angle shown in FIG. 17. The inclination angle θcy2 is 0 degrees or greater than 0 degrees and 45 degrees or less than 45 degrees.

As shown in FIG. 17 showing the Example not covered by the present invention, combustion chambers 130 are formed in the cylinder member 120b. Two combustion chambers 130 are formed in the cylinder member 120b. The two combustion chambers 130 are side by side in the left-right direction. Each combustion chamber 130 is formed of the lower surface of a cylinder head 123, a cylinder hole 122a, and the upper surface of a piston 128. In other words, a part of the combustion chamber 130 is formed by the inner surface of the cylinder hole 122a. In regard to the above, it is assumed that a linear line which passes the crankshaft axis Cr2 and is in parallel to the up-down direction when viewed in the left-right direction is a linear line La3. When viewed in the left-right direction, the two combustion chambers 130 are provided in front of the linear line La3. In other words, when viewed in the left-right direction, the two combustion chambers 130 are provided forward of the crankshaft axis Cr2. A leading end portion of an ignition plug 131 is provided in the combustion chamber 130, as shown in FIG. 19. The ignition plug 131 is connected to an ignition coil 132.

In the cylinder head 123, internal intake passage members 133 and internal exhaust passage members 134 are formed. The internal intake passage member 133 is connected to the combustion chamber 130. The internal intake passage member 133 is provided for each combustion chamber 130. The internal exhaust passage member 134 is connected to the combustion chamber 130. The internal exhaust passage member 134 is provided for each combustion chamber 130. The internal intake passage member 133 is provided to introduce air into the combustion chamber 130. The internal exhaust passage member 134 is provided to discharge the exhaust gas generated in the combustion chamber 130 from the combustion chamber 130.

In a surface forming the combustion chamber 130 of the cylinder head 123, a combustion chamber intake port 133a and a combustion chamber exhaust port 134a are formed. The combustion chamber intake port 133a is formed at the downstream end of the internal intake passage member 133. The combustion chamber exhaust port 134a is formed at the upstream end of the internal exhaust passage member 134. Intake ports 133b and exhaust ports 134b are formed in an outer surface of the cylinder head 123. The intake port 133b is formed at the upstream end of the internal intake passage member 133. The exhaust port 134b is formed at the downstream end of the internal exhaust passage member 134. The number of combustion chamber intake ports 133a provided for one combustion chamber 130 may be one, two, or more than two. The number of intake ports 133b is only one for one combustion chamber 130. The number of combustion chamber exhaust ports 134a provided for one combustion chamber 130 may be one, two, or more than two. The number of exhaust ports 134b is only one for one combustion chamber 130. As shown in FIG. 17, the intake ports 133b are formed in the front surface of the cylinder head 123. The exhaust ports 134b are also formed in the front surface of the cylinder head 123. As shown in FIG. 18, the two exhaust ports 134b are arranged to be side by side along the left-right direction.

As shown in FIG. 19, in the internal intake passage member 133, an intake valve 137 is provided to open and close the combustion chamber intake port 133a. The intake valve 137 is provided for each combustion chamber intake port 133a. In the internal exhaust passage member 134, an exhaust valve 138 is provided to open and close the combustion chamber exhaust port 134a. The exhaust valve 138 is provided for each combustion chamber exhaust port 134a. The intake valve 137 and the exhaust valve 138 are driven by a valve driving device (not illustrated) housed in the cylinder head 123. The valve driving device operates in sync with the crankshaft 127.

The engine main body 120 includes injectors 154. Each injector 154 is a fuel supplier configured to supply fuel to the combustion chamber 130. The injector 154 is provided for each combustion chamber 130. The injector 154 is positioned to inject fuel in the internal intake passage member 133. The injector 154 is connected to the fuel tank 110. A fuel pump (not illustrated) is provided inside the fuel tank 110. The fuel pump supplies fuel in the fuel tank 110 to the injector 154 with a pressure. The injector 154 may be positioned to inject fuel in the combustion chamber 130. Alternatively, the injector 154 may be positioned to inject fuel in a later-described branched intake passage member 151 of the intake device 150. As a fuel supplier, the engine main body 120 may include a carburetor instead of the injector 154.

The engine main body 120 includes an engine rotation speed sensor 171 and an engine temperature sensor 172. The engine rotation speed sensor 171 detects the rotation speed of the crankshaft 127, i.e., the engine rotation speed. The engine temperature sensor 172 detects the temperature of the engine main body 120. In the present embodiment, the engine temperature sensor 172 indirectly detects the temperature of the cylinder body 122 by detecting the temperature of the coolant water in the cooling passage 122b. The engine temperature sensor 172 may directly detect the temperature of the cylinder body 122.

### [Structure of Intake Device]

The intake device 150 includes one intake passage member 152 and two branched intake passage members 151. The intake passage member 152 is provided with an atmosphere suction port 152a which is exposed to the atmosphere. The atmosphere suction port 152a is formed at the upstream end of the intake passage member 152. The intake passage member 152 is provided with an air cleaner 153 configured to purify air. The downstream end of the intake passage member 152 is connected to the upstream ends of the two branched intake passage members 151. The downstream ends of the two branched intake passage members 151 are connected to the two intake ports 133b formed in the upper surface of the cylinder head 123, respectively. The atmosphere suction port 152a sucks air from the atmosphere. The air flowing into the intake passage member 152 through the atmosphere suction port 152a is supplied to the engine main body 120 via the two branched intake passage members 151.

A throttle valve 155 is provided in the branched intake passage member 151. One throttle valve 155 is provided for each combustion chamber 130. The opening degree of the throttle valve 155 is changed as the rider rotationally operates the throttle grip 113R.

A throttle position sensor 173, an intake pressure sensor 174, and an intake temperature sensor 175 are provided in each branched intake passage member 151. The throttle position sensor 173 detects the throttle opening degree. The intake pressure sensor 174 detects an internal pressure of the branched intake passage member 151. The intake temperature sensor 175 detects the temperature of air in the branched intake passage member 151.

### [Structure of Exhaust Device]

As shown in FIG. 19 showing the Example not covered by the present invention, the exhaust device 160 includes an upstream exhaust passage member 161, a catalyst portion 162, and a downstream collective exhaust passage member 163. Hereinafter, the upstream and downstream in the flow direction of exhaust gas of the exhaust device 160 and the internal exhaust passage member 134 will be simply referred to as upstream and downstream. The upstream exhaust passage member 161 includes two independent exhaust passage members 164 and an upstream collective exhaust passage member 165. One independent exhaust passage member 164 is provided for each combustion chamber 130. The downstream collective exhaust passage member 163 includes a downstream exhaust passage member 166 and a muffler member 167. The upstream ends of the two independent exhaust passage members 164 are connected to the two exhaust ports 134b formed in the front surface of the cylinder head 123, respectively. The downstream ends of the two independent exhaust passage members 164 are connected to the upstream end of the upstream collective exhaust passage member 165. The upstream collective exhaust passage member 165 gathers (merges) flows of the exhaust gas discharged from the two independent exhaust passage members 164. The downstream end of the upstream collective exhaust passage member 165 is connected to the upstream end of the catalyst portion 162. The catalyst portion 162 includes a main catalyst 162a configured to purify exhaust gas. The downstream end of the catalyst portion 162 is connected to the upstream end of the downstream exhaust passage member 166. The downstream end of the downstream exhaust passage member 166 is connected to the upstream end of the muffler member 167. The muffler member 167 is provided with an atmosphere discharge port 167a exposed to the atmosphere. The exhaust gas discharged from the two exhaust ports 134b of the engine main body 120 passes the upstream exhaust passage member 161 and flows into the catalyst portion 162. After the exhaust gas is purified while passing through the main catalyst 162a, the exhaust gas passes the downstream collective exhaust passage member 163 and is discharged from the atmosphere discharge port 167a.

A passage member formed of the internal exhaust passage member 134 and the independent exhaust passage member 164 will be referred to as an independent exhaust passage member 168. One independent exhaust passage member 168 is provided for each combustion chamber 130. Furthermore, a passage from the combustion chamber 130 to the atmosphere discharge port 167a will be referred to as an exhaust path 169. The engine unit 111 is provided with two exhaust paths 169. The exhaust path 169 is a space in which the exhaust gas discharged from one combustion chamber 130 passes. The exhaust path 169 is formed of the independent exhaust passage member 168, the upstream collective exhaust passage member 165, the catalyst portion 162, and the downstream collective exhaust passage member 163. To put it differently, the exhaust path 169 is formed of the internal exhaust passage member 134, the upstream exhaust passage member 161, the catalyst portion 162, and the downstream collective exhaust passage member 163.

The following will describe the exhaust device 160 in a further detailed manner, with reference to FIG. 16 and FIG. 17. As shown in FIG. 16 showing the Example not covered by the present invention, the two independent exhaust passage members 164A and 164B are arranged to be side by side along the left-right direction. The independent exhaust passage members 164 collectively indicate the independent exhaust passage members 164A and 164B. The independent exhaust passage member 164B is provided to the left of the independent exhaust passage member 164A. As shown in FIG. 21, when viewed in the front-rear direction, the independent exhaust passage member 164A and the independent exhaust passage member 168B are bended. Each of the two independent exhaust passage members 164A and 168 includes at least one bended portion.

At the upstream ends of the two independent exhaust passage members 164, the flow directions of the exhaust gas are in parallel to one another. Due to this, at the upstream ends of the two independent exhaust passage members 164, the flow directions of the exhaust gas are along the downward direction. To be more specific, the flow directions of the exhaust gas at the upstream ends of the two independent exhaust passage members 164 are substantially in parallel to the downward direction.

As shown in FIG. 16 showing the Example not covered by the present invention, the upstream collective exhaust passage member 165 includes three bended portions 165a, 165b, and 165c. The bended portion 165a is formed at around the upstream end of the upstream collective exhaust passage member 165. As shown in FIG. 17, the bended portion 165a is bended when viewed in the left-right direction. The bended portion 165b is formed upstream of the bended portion 165c. As shown in FIG. 16, the bended portions 165b and 165c are bended when viewed in the up-down direction.

As shown in FIG. 17 showing the Example not covered by the present invention, when viewed in the left-right direction, at the upstream end of the bended portion 165a, the flow direction of the exhaust gas is along the up-down direction. Furthermore, as shown in FIG. 21 showing the Example not covered by the present invention, when viewed in the front-rear direction, at the upstream end of the bended portion 165a, the flow direction of the exhaust gas is along the up-down direction. The flow direction of the exhaust gas at the upstream end of the bended portion 165a is therefore along the up-down direction. As shown in FIG. 17, when viewed in the left-right direction, at the downstream end of the bended portion 165a, the flow direction of the exhaust gas is along the front-rear direction. Furthermore, as shown in FIG. 16, when viewed in the up-down direction, at the downstream end of the bended portion 165a, the flow direction of the exhaust gas is along the front-rear direction. The flow direction of the exhaust gas at the downstream end of the bended portion 165a is therefore along the front-rear direction. The bended portion 165a changes the flow direction of the exhaust gas flowing therein, from the direction along the up-down direction to the direction along the front-rear direction. To be more specific, the bended portion 165a changes the flow direction of the exhaust gas flowing therein, from the direction along the downward direction to the direction along the rearward direction.

As shown in FIG. 17 showing the Example not covered by the present invention, when viewed in the left-right direction, a part of the upstream collective exhaust passage member 165 is provided in front of the engine main body 120. As shown in FIG. 21 showing the Example not covered by the present invention, when viewed in the front-rear direction, a part of the upstream collective exhaust passage member 165 overlaps the engine main body 120. A part of the upstream collective exhaust passage member 165 is provided in front of the engine main body 120. To be more specific, a part including the bended portion 165a of the upstream collective exhaust passage member 165 is provided in front of the engine main body 120.

As shown in FIG. 17 showing the Example not covered by the present invention, the central axis of the catalyst portion 162 is referred to as a central axis C4. When viewed in the left-right direction, the central axis C4 is along the front-rear direction. When viewed in the left-right direction, an inclination angle of the central axis C4 with respect to the front-rear direction is termed as θ4 (not illustrated). The inclination angle θ4 is substantially 0 degrees. In other words, when viewed in the left-right direction, the central axis C4 is substantially in parallel to the front-rear direction. The inclination angle θ4 may be larger than 0 degrees. The inclination angle θ4 is preferably 0 degrees or greater than 0 degrees and 45 degrees or less than 45 degrees. In other words, when viewed in the left-right direction, the flow direction of the exhaust gas flowing in the catalyst portion 162 is preferably along the front-rear direction. As shown in FIG. 16, when viewed in the up-down direction, the central axis C4 is substantially in parallel to the front-rear direction. Due to this, the flow direction of the exhaust gas flowing in the catalyst portion 162 is along the front-rear direction. When viewed in the up-down direction, the flow direction of the exhaust gas flowing in the catalyst portion 162 may be along the left-right direction. When viewed in the left-right direction, the flow direction of the exhaust gas flowing in the downstream exhaust passage member 166 is along the front-rear direction.

The downstream end and its surroundings of the upstream collective exhaust passage member 165 are tapered so that the diameter increases downward. It is assumed that the cross-sectional area of the downstream end and its surroundings of the upstream collective exhaust passage member 165 cut along the direction orthogonal to the flow direction of the exhaust gas is a cross-sectional area B1 (not illustrated). Furthermore, it is assumed that the cross-sectional area of the catalyst portion 162 cut along the direction orthogonal to the flow direction of the exhaust gas is a cross-sectional area B2 (not illustrated). The cross-sectional area B1 is smaller than the cross-sectional area B2. The upstream end and its surroundings of the downstream exhaust passage member 166 are tapered so that the diameter decreases downward. It is assumed that the cross-sectional area of the upstream end and its surroundings of the downstream exhaust passage member 166 cut along the direction orthogonal to the flow direction of the exhaust gas is a cross-sectional area B3 (not illustrated). The cross-sectional area B3 is smaller than the cross-sectional area B2.

The upstream collective exhaust passage member 165 is provided straight below the crankcase member 120a. When viewed in the left-right direction, an extension of the border between the crankcase member 120a and the cylinder member 120b is referred to as a linear line Lc. When viewed in the left-right direction, the upstream collective exhaust passage member 165 is provided behind the linear line Lc. A part of the upstream collective exhaust passage member 165 may be provided in front of the linear line Lc.

The muffler member 167 is a device for reducing noise generated by exhaust gas. The internal structure of the muffler member 167 is identical to that of a known muffler. The internal structure of the muffler member 167 may be identical to that of the muffler member 67 of the First Embodiment covered by the present invention.

The following will describe the catalyst portion 162 in a further detailed manner, with reference to FIG. 16 and FIG. 17 showing the Example not covered by the present invention. The catalyst portion 162 includes a main catalyst 162a and a cylindrical part 162b. The cylindrical part 162b is connected to the downstream end of the upstream collective exhaust passage member 165 and the upstream end of the downstream exhaust passage member 166. The cylindrical part 162b may be integrally molded with a part of the upstream collective exhaust passage member 165. The cylindrical part 162b may be integrally molded with a part of the downstream exhaust passage member 166. The exhaust device 160 does not include catalysts other than the main catalyst 162a. The main catalyst 162a purifies the exhaust gas most in a plurality of exhaust paths 169 (see FIG. 19). The material and structure of the main catalyst 162a are identical to those of the main catalyst 62a of the First Embodiment.

The central axis C4 of the catalyst portion 162 is coaxial with the central axis of the main catalyst 162a. The central axis C4 of the catalyst portion 162 indicates the central axis of the cylindrical part 162b. The length in the flow direction of the exhaust gas of the catalyst portion 162 is identical to the length in the flow direction of the exhaust gas of the main catalyst 162a. The center of the upstream end of the main catalyst 162a is identical in position to the center of the upstream end of the catalyst portion 162. The center of the downstream end of the main catalyst 162a is identical in position to the center of the downstream end of the catalyst portion 162. The length in the flow direction of the exhaust gas of the catalyst portion 162 is termed a length Dc3 (not illustrated). Furthermore, the maximum length in the direction orthogonal to the flow direction of the exhaust gas of the catalyst portion 162 is termed Dc4 (not illustrated). The length Dc3 is longer than the length Dc4.

As shown in FIG. 17 showing the Example not covered by the present invention, a plane which passes the frontmost end of the crankcase member 120a and is orthogonal to the front-rear direction is termed a plane Se5. A plane which passes the rearmost end of the crankcase member 120a and is orthogonal to the front-rear direction is termed a plane Se6. The catalyst portion 162 is provided between the plane Se5 and the plane Se6. When viewed in the left-right direction, a part of the catalyst portion 162 is provided straight below the crankcase member 120a. When viewed in the left-right direction, the catalyst portion 162 may be entirely provided straight below the crankcase member 120a. As shown in FIG. 16, the catalyst portion 162 entirely overlaps the crankcase member 120a when viewed in the up-down direction. The catalyst portion 162 is provided straight below the crankcase member 120a. The catalyst portion 162 is provided to be side by side with the oil storage 126 in the left-right direction. Only a part of the catalyst portion 162 may be provided straight below the crankcase member 120a. A part of the catalyst portion 162 is preferably provided straight below the crankcase member 120a.

When viewed in the left-right direction, a part of the catalyst portion 162 is provided behind the linear line La3. In other words, a part of the catalyst portion 162 is provided rearward of the crankshaft axis Cr2. Only a part of the catalyst portion 162 may be provided rearward of the crankshaft axis Cr2. At least a part of the catalyst portion 162 is preferably provided rearward of the crankshaft axis Cr2. The catalyst portion 162 is provided below the crankshaft axis Cr2. When viewed in the left-right direction, the catalyst portion 162 is provided straight below the cylinder axial line Cy2. A linear line which is orthogonal to the cylinder axial line Cy2 and passes the crankshaft axis Cr2 when viewed in the left-right direction is termed a linear line La4. When viewed in the left-right direction, the catalyst portion 162 is provided behind the linear line La4. When viewed in the left-right direction, only a part of the catalyst portion 162 may be provided behind the linear line La4. When viewed in the left-right direction, at least a part of the catalyst portion 162 is preferably provided behind the linear line La4.

It is assumed that a linear line which passes the central axis Ct of the driven shaft 146 of the continuously variable transmission 145 and is in parallel to the up-down direction when viewed in the left-right direction is a linear line La5. When viewed in the left-right direction, the catalyst portion 162 is provided in front of the linear line La5. The catalyst portion 162 is provided forward of the central axis Ct of the driven shaft 146.

As shown in FIG. 16 and FIG. 21 showing the Example not covered by the present invention, the catalyst portion 162 is disposed at a right part of the motorcycle 101. The center of the upstream end and the center of the downstream end of the catalyst portion 162 are not disposed at the center C0 in the left-right direction of the motorcycle 101. The center of the upstream end and the center of the downstream end of the catalyst portion 162 are to the right of the center C0 in the left-right direction of the motorcycle 101. When viewed in the up-down direction, the catalyst portion 162 is provided to the right of the center C0 in the left-right direction of the motorcycle 101. When viewed in the up-down direction, a part of the catalyst portion 162 may be disposed to the right of the center C0 in the left-right direction of the motorcycle 101 and the rest of the catalyst portion 62 may be disposed to the left of the center C0 in the left-right direction of the motorcycle 101.

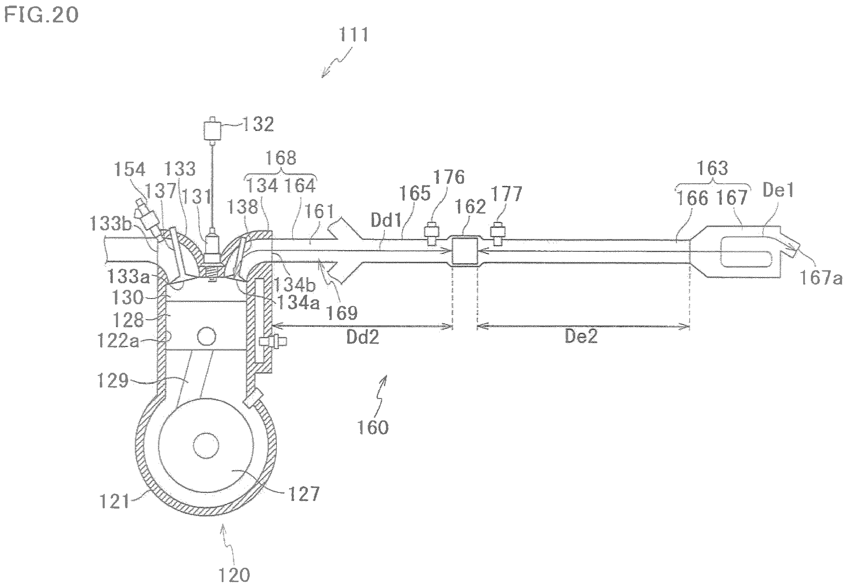

As shown in FIG. 20 showing the Example not covered by the present invention, an average of path lengths in the two exhaust paths 169 from the combustion chamber 130 to the upstream end of the catalyst portion 162 is termed a path length Dd1. The path length from the downstream end of the catalyst portion 162 to the atmosphere discharge port 167a is termed a path length De1. The path length Dd1 is shorter than the path length De1. An average of path lengths in the three exhaust paths 169 from the exhaust port 134b to the upstream end of the catalyst portion 162 is termed a path length Dd2. Furthermore, the path length from the downstream end of the catalyst portion 162 to the upstream end of the muffler member 167 is termed a path length De2. The path length Dd1 is longer than the path length De2. The path length Dd2 is longer than the path length De2. The path length Dd2 may be shorter than the path length De2. The path length Dd1 may be shorter than the path length De2.

As shown in FIG. 19 showing the Example not covered by the present invention, the exhaust device 160 includes an upstream oxygen sensor 176 and a downstream oxygen sensor 177. The upstream oxygen sensor 176 is provided on the upstream collective exhaust passage member 165. The upstream oxygen sensor 176 may be provided on at least one of the two internal exhaust passage members 134. The downstream oxygen sensor 177 is provided on the downstream exhaust passage member 166. The exhaust device 160 may not include the downstream oxygen sensor 177.

The engine unit 111 includes a controller (not illustrated) for controlling operations of the engine unit 111. The structure and operations of the controller are identical to those of the controller (not illustrated) of the First Embodiment being covered by the present invention.

The engine unit 111 of the Example may include an upstream sub-catalyst 47U as in Modification 1 of the First Embodiment. The engine unit 111 of the Example may include a downstream sub-catalyst 47D as in Modification 1 of the First Embodiment.

The engine unit 111 of the Example may include a turbocharger 230 as in Modification 2 of the First Embodiment.

In regard to the arrangements similar to those in the First Embodiment, the motorcycle 101 of the Example exerts effects similar to the effects described in the First Embodiment. The motorcycle 101 of the Example has the following characteristics.

The engine main body 120 is provided so that the central axis Cy2 of each of the cylinder holes 122a is along the front-back direction. The engine main body 120 is therefore short in the up-down direction. It is therefore possible to further restrain the increase in size of the motorcycle 101 in the up-down direction.

At least a part of the catalyst portion 162 is provided rearward of the crankshaft axis Cr2. Due to this, the path length of the upstream collective exhaust passage member 165 is long when compared to cases where the entirety of the catalyst portion 162 is provided forward of the crankshaft axis Cr2. The scattering of the exhaust gas in the upstream collective exhaust passage member 165 is therefore facilitated. As a result, deviation of a position where the exhaust gas passes the main catalyst 162a is further restrained. Accordingly, as compared with cases where the position is deviated, the exhaust gas purification performance of the main catalyst 162a is improved while the size of the main catalyst 162a is maintained. Due to this, the exhaust gas purification performance of the main catalyst 162a is further improved while the increase in size of the motorcycle 101 in the up-down direction is restrained.

At least a part of the catalyst portion 162 is provided forward of the central axis Ct of the driven pulley 145P2. Due to this, the path length Dd1 from the combustion chamber 130 to the catalyst portion 162 is short when compared to cases where the catalyst portion 162 is provided rearward of the central axis Ct of the driven pulley 145P2. For this reason, the temperature of the exhaust gas flowing into the main catalyst 162a is further increased. As a result, at the cold start of the engine unit 111, the time required to activate the deactivated main catalyst 162a is further shortened. Due to this, the exhaust gas purification performance of the main catalyst 162a is further improved.

A preferred embodiment of the present invention has been described. It should be noted that the present invention is not limited to the above-described embodiments without departing from the scope of the invention as defined by the appended claims. Further modifications described below may be used in combination as needed. For example, the term "preferably" or "preferable" herein is non-exclusive and means "preferably/preferable, but not limited to."

In the First Embodiment and the Example above, the crankcase 21, 121 and the cylinder body 22, 122 are different members. Alternatively, the crankcase and the cylinder body may be integrally formed. In the First Embodiment and the Example above, the cylinder body 22, 122, the cylinder head 23, 123, and the head cover 24, 124 are different members. Alternatively, two or three of the cylinder body, the cylinder head, and the head cover may be integrally formed. In the First Embodiment above, the crankcase 21 and the oil pan 26 are different members. Alternatively, the crankcase and the oil pan may be integrally formed. In the Example above, the oil storage 126 is provided at the crankcase 121. Alternatively, the oil storage and the crankcase may be formed as different members. In other words, the crankcase member 120a may include an oil pan and a crankcase.

In the First Embodiment above, the cross-sectional area of the main catalyst 62a cut along the direction orthogonal to the flow direction of the exhaust gas is circular. The cross-sectional shape of the main catalyst 62a, however, is not limited to circular. The cross-sectional shape of the main catalyst 62a may be elliptic and long in the left-right direction. In other words, the cross-sectional shape may be flat. The cross-sectional shape of the catalyst portion 62 is preferably analogous to the cross-sectional shape of the main catalyst 62a.

When the sub-catalyst 47 has a porous structure, this modification may be employed in the sub-catalyst 47. Furthermore, the modification may be employed in the main catalyst 162a of the Example above.

In the First Embodiment above, the length Dc1 of the catalyst portion 62 is longer than the length Dc2 of the catalyst portion 62. In this regard, the length Dc1 of the catalyst portion 62 may be shorter than the length Dc2 of the catalyst portion 62. The length Dc1 is the length of the catalyst portion 62 along the flow direction of the exhaust gas. The length Dc2 is the maximum length of the catalyst portion 62 in the direction orthogonal to the flow direction of the exhaust gas.

This modification may be employed in the catalyst portion 162 of the Example above.

The main catalyst 62a may include a plurality of catalysts provided to be close to one another. Each catalyst includes a base and a catalyst material. Providing a plurality of catalysts to be close to one another indicates the following state. That is to say, catalysts are close to one another in the sense that the distance between neighboring catalysts is short, rather than the length of each catalyst is short in the flow direction of the exhaust gas. The bases of the catalysts may be formed of the same or different materials. The catalyst materials of the catalysts may be the same or different noble metals.

This modification may be employed in the sub-catalyst 47. Furthermore, the modification may be employed in the main catalyst 162a of the Example above.

In the First Embodiment above, the exhaust device 60 is arranged so that the catalyst portion 62 is disposed at a right part of the motorcycle 1. Alternatively, the exhaust device 60 may be arranged so that the catalyst portion 62 is disposed at a left part of the motorcycle 1. In this case, the muffler member 67 is also preferably disposed at a left part of the motorcycle 1. The exhaust device 60 may be arranged so that the central axis C3 of the catalyst portion 62 is provided at the center C0 in the left-right direction of the motorcycle 1. Furthermore, the exhaust device 60 may be arranged so that the center of the upstream end and the center of the downstream end of the catalyst portion 62 are positioned on the respective sides of the center C0 in the left-right direction of the motorcycle 1.

These modifications may be employed in the exhaust device 160 of the Example above.

In the First Embodiment above, the catalyst portion 62 is provided so that the flow direction of the exhaust gas flowing therein is along the front-rear direction. Alternatively, the catalyst portion 62 is provided so that the flow direction of the exhaust gas flowing therein is along the left-right direction.

This modification may be employed in the catalyst portion 162 of the Example above.

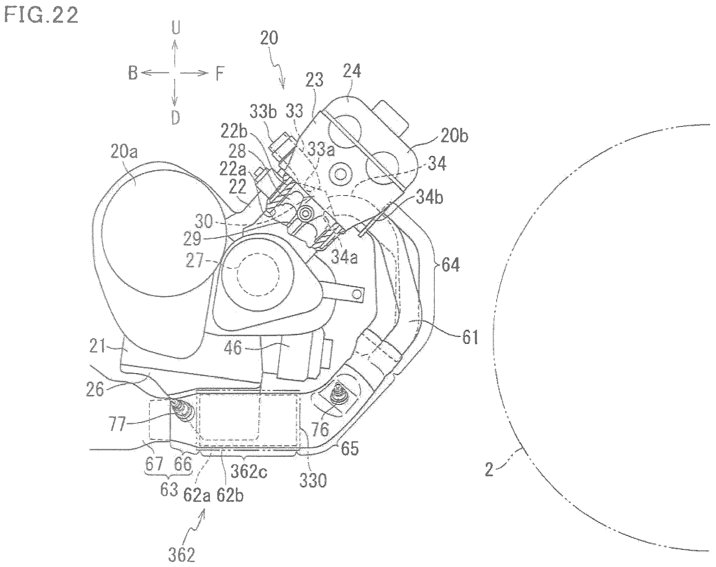

As shown in FIG. 22, at least a part of the outer surface of the cylindrical part 62b may be covered with a catalyst protector 330. In the catalyst protector 330, a part covering the outer surface of the cylindrical part 62b is termed a catalyst protector portion 362c. The catalyst protector portion 362c is included in a catalyst portion 362. A part of the catalyst protector 330 may be included in the upstream collective exhaust passage member 65. A part of the catalyst protector 330 may be included in the downstream exhaust passage member 66. The catalyst protector portion 362c may or may not be cylindrical in shape. When the catalyst protector portion 362c is provided, the heat keeping effect of the main catalyst 62a is improved. As a result, at the cold start of the engine unit, the time required to activate the deactivated main catalyst 62a is further shortened. Due to this, the exhaust gas purification performance of the main catalyst 62a is further improved. Furthermore, the catalyst protector portion 362c protects the cylindrical part 62b and the main catalyst 62a. Furthermore, the catalyst protector portion 362c improves the appearance.

This modification may be employed in the catalyst portion 162 of the Example above.

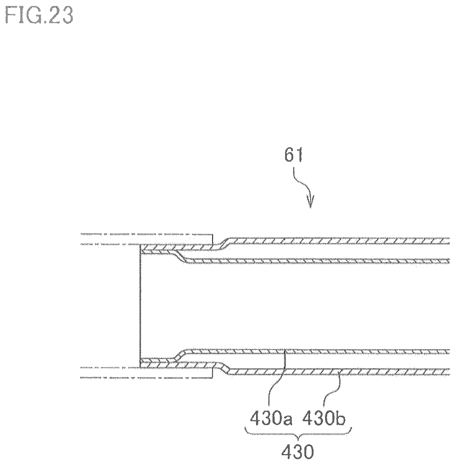

At least a part of the upstream exhaust passage member 61 may be formed of a multi-walled pipe. The multi-walled pipe is constituted by an inner pipe and at least one outer pipe covering the inner pipe. As shown in FIG. 23, the multi-walled pipe may be a double-walled pipe 430. The double-walled pipe 430 includes an inner pipe 430a and an outer pipe 430b. The both end portions of the inner pipe 430a are in contact with the both end portions of the outer pipe 430b. The inner pipe 430a and the outer pipe 430b may be in contact with each other at a part other than the both end portions. For example, the inner pipe 430a and the outer pipe 430b may be in contact with each other at a bended portion. The multi-walled pipe 430 restrains the decrease in the temperature of the exhaust gas in the upstream exhaust passage member 61. As a result, at the cold start of the engine unit 11, the time required to activate the deactivated main catalyst 62a is shortened. Due to this, the exhaust gas purification performance of the main catalyst 62a is further improved.

This modification may be employed in the upstream exhaust passage member 161 of the Example above.

The exhaust device 60 may include two muffler members 67 for one catalyst portion 62. In other words, the exhaust device 60 may include two atmosphere discharge ports 67a for one catalyst portion 62. In this case, the downstream exhaust passage member 66 is branched into two. The two muffler members 67 are provided to be side by side in the up-down direction. Alternatively, the two muffler members 67 are disposed at a right part and a left part of the motorcycle 1, respectively.

This modification may be employed in the exhaust device 160 of the Example above.

In the First Embodiment above, the number of exhaust ports 34b is identical to the number of combustion chambers 30 in the engine main body 20. In this regard, when a plurality of combustion chamber exhaust ports 34a are provided for one combustion chamber 30, the number of exhaust ports 34b may be larger than the number of combustion chambers 30.

This modification may be employed in the engine main body 120 of the Example above.

The number of exhaust ports 34b may be smaller than the number of combustion chambers 30. The number of exhaust ports 34b is at least one. In this case, the exhaust gas discharged from the combustion chambers 30 is gathered inside the engine main body 20. To be more specific, the engine main body 20 includes a plurality of internal independent exhaust passage members and an internal collective exhaust passage member. The plurality of internal independent exhaust passage members are connected to the combustion chambers 30, respectively. The internal collective exhaust passage member is connected to the downstream ends of the internal independent exhaust passage members. The internal collective exhaust passage member gathers the exhaust gas discharged from the internal independent exhaust passage members. The exhaust port 34b is at the downstream end of the internal collective exhaust passage member. The internal collective exhaust passage member is connected to the upstream end of the upstream collective exhaust passage member 65. A plurality of independent exhaust passage members 64 are not provided. According to this modification, the length of a path where only the exhaust gas discharged from one combustion chamber 30 passes is shortened. Due to this, the area of an internal surface of a passage member from the combustion chambers 30 to the catalyst portion 62 is decreased. Due to this, the heat capacity of the passage members from the combustion chambers 30 to the catalyst portion 62 is decreased. The temperature of the exhaust gas flowing into the catalyst portion 62 is therefore increased. As a result, at the cold start of the engine unit 11, the time required to activate the deactivated main catalyst 62a is shortened. Due to this, the exhaust gas purification performance of the main catalyst 62a is improved. This modification may be employed in the engine unit 111 of the Example above.

The engine unit 11 may be arranged such that the exhaust gas is cooled by coolant water in a passage member from the combustion chamber 30 to the catalyst portion 62. In other words, the engine unit 11 may include an exhaust gas cooling passage member in which coolant water for cooling the exhaust gas flows. At least a part of the exhaust gas cooling passage member may be formed at the outer periphery of at least a part of the upstream collective exhaust passage member 65. Alternatively, at least a part of the exhaust gas cooling passage member may be formed at the outer periphery of at least a part of each of the independent exhaust passage members 64. At least a part of the exhaust gas cooling passage member may be formed at the outer periphery of at least a part of each of the internal exhaust passage members 34. The coolant water flowing in the exhaust gas cooling passage member may be shared with or different from the coolant water for cooling the engine main body 20. The cooling of the exhaust gas may be carried out by means of a cooling medium other than water, instead of the coolant water. From the cold start of the engine unit 11 to a predetermined timing, the coolant water in the exhaust gas cooling passage member is preferably not circulated. In other words, the exhaust gas is preferably not to be cooled by the coolant water during this period. The predetermined timing is determined based on, for example, an elapsed time, the total rotation number of the crankshaft 27, or the temperature of the exhaust gas. According to this modification, because the exhaust gas is cooled by the coolant water, excessive increase in the temperature of the exhaust gas flowing into the catalyst portion 62 is prevented. It is therefore possible to prevent the deterioration of the main catalyst 62a due to excessive heating. Due to this, the exhaust gas purification performance of the main catalyst 62a is further improved. Furthermore, when at least a part of the exhaust gas cooling passage member is formed at the outer periphery of at least a part of the upstream collective exhaust passage member 65, the following effect is obtained. The exhaust gas cooling passage member is downsized when compared to cases where the exhaust gas cooling passage member is not provided at the outer periphery of the upstream collective exhaust passage member 65 but provided at the outer periphery of each of the independent exhaust passage members 68. It is therefore possible to restrain the increase in size of the vehicle in the up-down direction and the front-rear direction.

This modification may be employed in the engine unit 111 of the Example above.

The combustion chamber 30 may include a main combustion chamber and an auxiliary combustion chamber connected to the main combustion chamber. In this case, one combustion chamber of the present teaching is formed of the main combustion chamber and the auxiliary combustion chamber.

This modification may be employed in the combustion chamber 130 of the Example above.

In the First Embodiment above, the exhaust ports 34b are formed in the front surface of the engine main body 20. Alternatively, the exhaust ports 34b may be formed in the rear surface of the engine main body 20. In the Example above, the exhaust port 134b is formed in the lower surface of the engine main body 120. Alternatively, the exhaust port 134b may be formed in the upper surface of the engine main body 120.

In the First Embodiment above, the engine main body 20 includes three combustion chambers 30. The number of combustion chambers 30 in the engine main body 20 may be two, four, or more than four. In the Example above, the engine main body 120 includes two combustion chambers 130. The number of combustion chambers 130 in the engine main body 120 may be three or more.

When the number of combustion chambers 30 is four or more, a plurality of catalyst portions 62 may be provided. Only the exhaust gas discharged from one or some of the combustion chambers 30 may be allowed to pass one catalyst portion 62. This arrangement will be explained with the assumption that the number of combustion chambers 30 is four. The exhaust device 60 includes a plurality of independent exhaust passage members, two upstream collective exhaust passage members, two catalyst portions, and two downstream collective exhaust passage members. The first upstream collective exhaust passage member gathers the exhaust gas discharged from the right two combustion chambers 30. The second upstream collective exhaust passage member gathers the exhaust gas discharged from the left two combustion chambers 30. The first catalyst portion is connected to the downstream end of the first upstream collective exhaust passage member and the upstream end of the first downstream collective exhaust passage member. The first catalyst portion is connected to the downstream end of the second upstream collective exhaust passage member and the upstream end of the second downstream collective exhaust passage member. Each of the first downstream collective exhaust passage member and the second downstream collective exhaust passage member has an atmosphere discharge port. In this case, the first upstream collective exhaust passage member, the first catalyst portion, and the first downstream collective exhaust passage member are equivalent to the upstream collective exhaust passage member, the catalyst portion, and the downstream collective exhaust passage member of the present teaching, respectively. Furthermore, the second upstream collective exhaust passage member, the second catalyst portion, and the second downstream collective exhaust passage member are equivalent to the upstream collective exhaust passage member, the catalyst portion, and the downstream collective exhaust passage member of the present teaching, respectively.

This modification may be employed in the exhaust device 160 of the Example above.

When the number of combustion chambers 30 is four or more, the engine main body 20 may be a so-called V engine. For example, a V4 engine has four combustion chambers, and two combustion chambers are provided in a front side whereas the remaining two combustion chambers are provided in a rear side. The combustion chambers provided in the front part of the V engine are termed front combustion chambers. The front combustion chambers are side by side in the left-right direction. The combustion chambers provided in the rear part of the V engine are termed rear combustion chambers. The rear combustion chambers are side by side in the left-right direction. A cylinder hole forming a part of the front combustion chamber is termed a front cylinder hole. The direction of the central axis of the front cylinder hole is identical to the direction of the cylinder axial line Cy. Each front combustion chamber communicates with the internal exhaust passage member 34, the upstream exhaust passage member 61, the catalyst portion 62, and the downstream collective exhaust passage member 63. The front combustion chambers are encompassed in the plurality of combustion chambers of the present teaching. The rear combustion chamber is not encompassed in the plurality of combustion chambers of the present teaching.

When the engine main body 20 is a V engine, the exhaust gas discharged from the rear combustion chambers may be merged with the exhaust gas discharged from the front combustion chambers. For example, the downstream end of an exhaust passage member communicating with the rear combustion chambers may be connected to the upstream collective exhaust passage member 65. In this case, the exhaust gas discharged from the rear combustion chamber is purified by the main catalyst 62a. For example, the downstream end of an exhaust passage member communicating with the rear combustion chamber may be connected to the downstream exhaust passage member 66. In this case, a catalyst for purifying the exhaust gas discharged from the rear combustion chambers is provided in addition to the main catalyst 62a.

When the engine main body 20 is a V engine, the exhaust gas discharged from the rear combustion chambers may not be merged with the exhaust gas discharged from the front combustion chambers. In this case, a catalyst for purifying the exhaust gas discharged from the rear combustion chambers is provided in addition to the main catalyst 62a.

In the First Embodiment above, the cylinder axial line Cy is inclined with a positive slope in the forward direction. Alternatively, the cylinder axial line Cy may be inclined with a negative slope in the forward direction. In other words, the cylinder portion 20b may be tilted rearward.

In the First Embodiment above, the positions of the downstream ends of the independent exhaust passage members 64 are substantially identical to one another. Alternatively, in the flow direction of the exhaust gas flowing in the upstream collective exhaust passage member 65, the downstream end of one independent exhaust passage member 64 may be downstream of the downstream end of another independent exhaust passage member 64. In this case, the upstream oxygen sensor 76 is preferably provided downstream of the downstream ends of all independent exhaust passage members 64.

In the First Embodiment above, the gas flowing in the exhaust path 69 during the driving of the engine unit 11 is only the exhaust gas discharged from the combustion chamber 30. The engine unit 11, however, may include a secondary air supply mechanism configured to supply air to the exhaust path 69. A known arrangement is employed for the specific arrangement of the secondary air supply mechanism. The secondary air supply mechanism may forcibly supply air to the exhaust path 69 by means of an air pump. The secondary air supply mechanism may take air into the exhaust path 69 by a negative pressure in the exhaust path 69. In this case, the secondary air supply mechanism includes a reed valve which is opened and closed in accordance with a pressure change in the exhaust path 69. When the secondary air supply mechanism is included, the upstream oxygen sensor 76 may be provided upstream or downstream of a position of air inflow.

This modification may be employed in the engine unit 111 of the Example above.

The engine unit of the straddled vehicle in which the present teaching is employed may be an air-cooled engine. The engine unit of the straddled vehicle in which the present teaching is employed may be a natural air-cooled engine unit or a forced air-cooled engine unit.

The applications of the present teaching are not limited to motorcycles. The present teaching may be applied to a leaning vehicle which is not a motorcycle. The leaning vehicle is a vehicle including a vehicle body frame which is configured to lean rightward of the vehicle when turning right and lean leftward of the vehicle when turning left. The present teaching may be applied to a straddled vehicle which is not a motorcycle. The straddled vehicle indicates all types of vehicles on which a rider straddles a vehicle on a saddle. The straddled vehicle to which the present teaching is applicable encompasses vehicles such as motorcycles, tricycles, and four-wheeled buggies (ATVs: All Terrain Vehicles). The front wheel unit of the present teaching may include a plurality of front wheels. The rear wheel unit of the present teaching may include a plurality of rear wheels.

Japanese Patent Application No.2014-256985, is termed a basic application 1. Japanese Patent Application No.2014-256983, is termed a basic application 2. The water cooling device 40 of the present specification is equivalent to a water cooler 40 in the basic applications 1 and 2. The intake device 50 of the present specification is equivalent to an intake device 50 in the basic applications 1 and 2. The exhaust device 60 of the present specification is equivalent to an exhaust device 60 in the basic applications 1 and 2. The crankcase 21 of the present specification is equivalent to a crankcase main body 25 of the basic applications 1 and 2. The internal intake passage member 33 of the present specification is equivalent to a structure forming an intake passage 33 in the basic applications 1 and 2. The internal exhaust passage member 34 of the present specification is equivalent to a structure forming an exhaust path 34 in the basic applications 1 and 2. The branched intake passage member 51 of the present specification is equivalent to a structure forming a branched intake passage 51 in the basic applications 1 and 2. The main catalyst 62a of the present specification is equivalent to an engine lower catalyst 65 in the basic applications 1 and 2. The catalyst portion 62 of the present specification is equivalent to an engine lower catalyst unit 68 in the basic applications 1 and 2. The first to third exhaust pipes 56A, 56B, and 56C of the present specification are equivalent to independent exhaust pipes 61A, 61B, and 61C in the basic applications 1 and 2. The independent exhaust passage member 64 of the present specification is equivalent to a structure forming an independent exhaust passage member 66 in the basic applications 1 and 2. The upstream collective exhaust passage member 65 of the present specification is equivalent to a structure forming an upstream collective exhaust path 67 in the basic applications 1 and 2. The downstream collective exhaust passage member 63 of the present specification is equivalent to a structure forming a downstream collective exhaust path 69 in the basic applications 1 and 2. The upstream oxygen sensor 76 of the present specification is equivalent to a front oxygen sensor 76 in the basic applications 1 and 2. The downstream oxygen sensor 77 of the present specification is equivalent to a rear oxygen sensor 77 in the basic applications 1 and 2. It is noted that the terms in the present specification may be equivalent to different terms in the basic applications 1 and 2 from the terms above.

In the specification of the present teaching, the phrase that the upstream collective exhaust passage member 65 merges the exhaust gas discharged from the three independent exhaust passage members 64 indicates that the exhaust gas discharged from the three independent exhaust passage members 64 can be merged. However, the exhaust gas discharged from the three independent exhaust passage members 64 may not be mixed. As described above, the combustion process is carried out at different timings in the three combustion chambers 30. Due to this, the exhaust gas discharged from the three combustion chambers 30 may not be mixed in some cases.

This definition is also applicable to the Example above.

In this specification, an "end" of a component indicates a leading end of the component or a part which forms the outline of the component when the component is viewed in one direction. Meanwhile, an "end portion" of a component indicates a part which includes an "end" of the component and its surroundings.

In this specification, a passage member indicates walls and the like which form a path by surrounding the path. A path indicates a space through which a target passes. The exhaust passage member indicates walls or the like which form the exhaust path by surrounding the exhaust path. The exhaust path indicates a space through which exhaust gas passes.

In this specification, the path length of any part of the exhaust path 69 indicates the length of a line passing the center of the exhaust path. Furthermore, the path length in the expansion chamber in the muffler member 67 is the length of the path connecting the center of the inflow port of the expansion chamber with the center of the outflow port of the expansion chamber in the shortest distance.

This definition is also applicable to the Example above.

In this specification, an inclination angle of a linear line A with respect to a direction B indicates a smaller angle formed by the linear line A and the direction B.

In this specification, a direction along a direction A is not limited to a direction in parallel to the direction A. The direction along the direction A includes a direction tilted by +45 to -45 degrees with respect to the direction A. This definition is applied to cases where a linear line is along the direction A. The direction A does not indicate any specific direction. The direction A may be the horizontal direction or the front-rear direction.

In this specification, when a component A and a component B are side by side in a direction X, the following case is indicated. The component A and the component B are provided to be on a linear line along the direction X. The component A and the component B may or may not be arranged so that a linear line in parallel to the direction X passes through the components.

In this specification, when a component A is provided forward of a component B, the following case is indicated. The component A is provided in front of a plane which passes the frontmost end of the component B and is orthogonal to the front-rear direction. The component A and the component B may or may not be arranged so that a linear line in parallel to the front-rear direction passes through the components. This definition is applicable to directions other than the front-rear direction. Furthermore, this definition is applicable not only to components but also to a part of a component, a linear line, and a plane.

In this specification, when a component A is provided in front of a component B, the entirety of the component A is provided in front of a part of the front surface of the component B, which faces the component A. In this regard, the component A and the component B are arranged so that a linear line in parallel to the front-rear direction passes through the components. Furthermore, when viewed in the front-rear direction, the component B at least partially overlaps the entire component A. In regard to this definition, when a part of the front surface of the component B, which faces the component A, is the frontmost end of the component B, the component A is provided forward of the component B. When a part of the front surface of the component B, which faces the component A, is not the frontmost end of the component B, the component A may or may not be provided forward of the component B. This definition is applicable to directions other than the front-rear direction. Furthermore, this definition is applicable not only to components but also to a part of a component, a linear line, and a plane. The front surface of the component B indicates a surface which is visible when the component B is viewed from the front side. Depending on the shape of the component B, the front surface of the component B may be formed of a plurality of planes, rather than a single continuous plane.

In this specification, when a component A is provided in front of a component B when viewed in the left-right direction, the entirety of the component A is provided in front of the front surface of the component B when viewed in the left-right direction. In this regard, when viewed in the left-right direction, the component A and the component B are arranged so that a linear line in parallel to the front-rear direction passes through the components. In three dimensions, the component A and the component B may or may not be arranged so that a linear line in parallel to the front-rear direction passes through the components. This definition is applicable to directions other than the front-rear direction. Furthermore, this definition is applicable not only to components but also to a part of a component, a linear line, and a plane.

In this specification, when a component A is provided between a component B and a component C when viewed in the left-right direction, the following state is indicated. To begin with, a case where the component B and the component C are side by side in the front-rear direction when viewed in the left-right direction will be explained. A line segment, which is the uppermost one of line segments connecting points on the outline of the component B with points on the outline of the component C when viewed in the left-right direction, is referred to as a line segment LU. Furthermore, a line segment, which is the lowermost one of line segments connecting the points on the outline of the component B with the points on the outline of the component C when viewed in the left-right direction, is referred to as a line segment LD. The state above is a state in which, when viewed in the left-right direction, the component A is in a quadrangular region having the line segments LU and LD as two sides and does not overlap the components B and C. Subsequently, a case where the component B and the component C are side by side in the up-down direction when viewed in the left-right direction will be explained. A line segment, which is the leftmost one of line segments connecting points on the outline of the component B with points on the outline of the component C when viewed in the left-right direction, is referred to as a line segment LL. Furthermore, a line segment, which is the rightmost one of line segments connecting points on the outline of the component B with points on the outline of the component C when viewed in the left-right direction, is referred to as a line segment line segment LR. The state is a state in which, when viewed in the left-right direction, the component A is in a quadrangular region having the line segments LL and LR as two sides and does not overlap the components B and C. This definition is applicable to cases where the viewing direction is not the left-right direction. Furthermore, this definition is applicable not only to components but also to a part of a component, a linear line, and a plane.

### [Reference Signs List]

1, 101 motorcycle (straddled vehicle)
2, 102 front wheel unit
3, 103 rear wheel unit
4, 104 vehicle body frame
11, 111 engine unit
20, 120 engine main body
20a, 120a crankcase member
20b, 120b cylinder portion
21, 121 crankcase
22a, 122a cylinder hole
27, 127 crankshaft
30, 130 combustion chamber
34, 134 internal exhaust passage member
34b, 134b exhaust port
45 oil filter
47U (47) upstream sub-catalyst
47D (47) downstream sub-catalyst 60, 160 exhaust device
61, 161 upstream exhaust passage member
62, 162, 362 catalyst portion (below-engine catalyst portion)
62a, 162a main catalyst
62b, 162b cylindrical part
63, 163 downstream collective exhaust passage member
64, 64A, 64B, 164, 164A, 164B, 264 independent exhaust passage member
65, 165, 265 upstream collective exhaust passage member
65a, 165a, 165b, 165c bended portion
66, 166 downstream exhaust passage member
67, 167 muffler member
67a, 167a atmosphere discharge port
68, 168 independent exhaust passage member
69, 169 exhaust path
145 continuously variable transmission
145P1 driving pulley (driving rotator)
145P2 driven pulley (driven rotator)
145B V belt (winding member)

## Claims

1. A straddled vehicle comprising:
a vehicle body frame (4);
an engine unit (11) supported by the vehicle body frame (4);
a front wheel unit (2) including at least one front wheel and provided in front of the engine unit (11) in a vehicle front-rear direction when viewed in a vehicle left-right direction; and
a rear wheel unit (3) including at least one rear wheel and provided behind the engine unit (11) in the front-rear direction when viewed in the left-right direction,
the engine unit (11) including:
an engine main body (20) disposed so that the central axis (Cy) of each of the cylinder holes (22a) is along the up-down direction and including a crankcase member, cylinder holes (22a), combustion chambers (30), and exhaust ports, the crankcase member (20a) including a crankshaft (27) having a central axis (Cr) being along the left-right direction, the combustion chambers (30) being side by side along the left-right direction and each of which is partially formed by the cylinder hole, and the exhaust ports (34b) communicating with the respective combustion chambers (30) and being formed on a front surface of the engine main body (30); and
an exhaust device (60) connected to the exhaust ports (34b) of the engine main body (20) and including an atmosphere discharge port (67a) discharging exhaust gas to the atmosphere,
the exhaust device (60) including:
independent exhaust passage members (64, 64A, 64B, 64C) connected to the respective exhaust ports (34b) of the engine main body (20), exhaust gas discharged from the engine main body (20) flowing into the independent exhaust passage members (64, 64A, 64B, 64C);
a below-engine catalyst portion (62) including a main catalyst (62a) which purifies the exhaust gas discharged from the combustion chambers (30) most in exhaust paths from the combustion chambers (30) to the atmosphere discharge port (67a), the length of the below-engine catalyst portion (62) in a flow direction of the exhaust gas being identical to the length of the main catalyst (62a) in the flow direction of the exhaust gas, at least a part of the below-engine catalyst portion (62) being provided straight below the crankcase member (20a) in a vehicle up-down direction, at least a part of the below-engine catalyst portion (62) being provided forward of the central axis (Cr) of the crankshaft (27) in the front-rear direction, when viewed in the left-right direction, at least a part of the below-engine catalyst portion (62) being provided straight above a line segment (Lw1) which is the lowest one of line segments connecting points on the outline of the engine main body (20) with points on the outline of the front wheel unit (2), and the flow direction of the exhaust gas flowing in the below-engine catalyst portion (62) being along a horizontal direction; and
an upstream collective exhaust passage member (65) which includes a bended portion (65a) by which the flow direction of the exhaust gas flowing in the bended portion (65a) is changed from a direction along the up-down direction to a direction along the horizontal direction, the upstream collective exhaust passage member (65) being connected to downstream ends of the independent exhaust passage members (64, 64A, 64B, 64C) and an upstream end of the below-engine catalyst portion (62), the upstream collective exhaust passage member (65) being configured to merge the exhaust gas exhausted from the independent exhaust passage members (64, 64A, 64B, 64C),
the straddled vehicle **characterized in that**
an upstream oxygen sensor (76) configured to detect the oxygen density in the exhaust gas is provided on the upstream collective exhaust passage member (65) being partially provided in front of the engine main body (20) in the front-rear direction and partially overlapping the engine main body (20) when viewed in the front-rear direction.

2. The straddled vehicle according to claim 1 wherein
when viewed in the left-right direction, the flow directions of the exhaust gas at the downstream ends of the independent exhaust passage members (64, 64A, 64B, 64C) are obliquely rearward and downward, and
when viewed in the left-right direction, the flow direction of exhaust gas at a part of the upstream collective exhaust passage member (65), which is upstream of the bended portion (65a), is in parallel to an axial line passing the center of the downstream end of the independent exhaust passage member (64).

3. The straddled vehicle according to claim 1 or 2, wherein
the downstream end and its surroundings of the upstream collective exhaust passage member (65) are tapered so that the diameter increases downward.

4. The straddled vehicle according to any one of claims 1 to 3, wherein
when viewed in the left-right direction, the flow directions of the exhaust gas at the upstream ends of the independent exhaust passage members (64, 64A, 64B, 64C) are forward and obliquely downward.

5. The straddled vehicle according to any one of claims 1 to 4, wherein, when viewed in the left-right direction, at least a part of the below-engine catalyst portion (62) is provided, in the front-rear direction, behind a linear line (Lp) which is orthogonal to the central axes (Cy) of the cylinder holes (22a) and passes the central axis (Cr) of the crankshaft (27).

6. The straddled vehicle according to any one of claims 1 to 5, wherein
the exhaust device (60) is configured such that the bended portion (65a) changes the flow direction of the exhaust gas flowing in the bended portion (65a) from a direction along a downward direction to a direction along a rearward direction.

7. The straddled vehicle according to any one of claims 1 to 6, wherein
the number of the combustion chambers (30) is four or more,
the straddled vehicle includes a plurality of the below-engine catalyst portions (62); and
the exhaust device (60) is configured so that only the exhaust gas discharged from some of the combustion chambers (30) passes a corresponding one of the below-engine catalyst portions (62).

8. The straddled vehicle according to any one of claims 1 to 7, wherein the exhaust device (60) includes:
a downstream collective exhaust passage member (63) having an upstream end connected to a downstream end of the below-engine catalyst portion (62) and including the atmosphere discharge port (67a); and
at least one downstream sub-catalyst (47, 47D) which is provided in the downstream collective exhaust passage member (63) to purify the exhaust gas.

9. The straddled vehicle according to any one of claims 1 to 7, wherein
the exhaust device (60) includes no catalysts other than the main catalyst (62a) included in the below-engine catalyst portion (62).

## Patentansprüche

1. Ein Grätschsitz-Fahrzeug, das folgende Merkmale aufweist:
einen Fahrzeugkörperrahmen (4);
eine Motoreinheit (11), die durch den Fahrzeugkörperrahmen (4) getragen wird;
eine Vorderradeinheit (2), die zumindest ein Vorderrad umfasst und in einer Fahrzeug-Vorwärts-Rückwärts-Richtung vor der Motoreinheit (11) vorgesehen ist, in einer Fahrzeug-Links-Richtung gesehen; und
eine Hinterradeinheit (3), die zumindest ein Hinterrad umfasst und in der Vorwärts-Rückwärts-Richtung hinter der Motoreinheit (11) vorgesehen ist, in der Links-Rechts-Richtung gesehen,
wobei die Motoreinheit (11) folgende Merkmale umfasst:
einen Motorhauptkörper (20), der so angeordnet ist, dass die Mittellachse (Cy) von jedem der Zylinderlöcher (22a) entlang der Aufwärts-Abwärts-Richtung liegt, und ein Kurbelgehäusebauglied, Zylinderlöcher (22a), Verbrennungskammern (30) und Auslassöffnungen umfasst, wobei das Kurbelgehäusebauglied (20a) eine Kurbelwelle (27) mit einer Mittelachse (Cr) umfasst, die entlang der Links-Rechts-Richtung liegt, wobei die Verbrennungskammern (30) entlang der Links-Rechts-Richtung nebeneinander liegen und jede derselben teilweise durch das Zylinderloch gebildet ist, und die Auslassöffnungen (34b) mit den jeweiligen Verbrennungskammern (30) kommunizieren und auf einer Vorderoberfläche des Motorhauptkörpers (30) gebildet sind; und
eine Auslassvorrichtung (60), die mit den Auslassöffnungen (34b) des Motorhauptkörpers (20) verbunden ist, und eine Atmosphärenablassöffnung (67a) umfasst, die Abgas in die Atmosphäre ablässt;
wobei die Auslassvorrichtung (60) folgende Merkmale umfasst:
unabhängige Auslassdurchgangsbauglieder (64, 64A, 64B, 64C), die mit den jeweiligen Auslassöffnungen (34b) des Motorhauptkörpers (20) verbunden sind, wobei Abgas, das von dem Motorhauptkörper (20) abgelassen wird, in die unabhängigen Auslassdurchgangsbauglieder (64, 64A, 64B, 64C) fließt;
einen Untermotor-Katalysatorabschnitt (62), der einen Hauptkatalysator (62a) umfasst, der das Abgas reinigt, das von den Verbrennungskammern (30) überwiegend in Auslasswegen von den Verbrennungskammern (30) zu der Atmosphärenablassöffnung (67a) abgelassen wird, wobei die Länge des Untermotor-Katalysatorabschnitts (62) in einer Flussrichtung des Abgases identisch ist mit der Länge des Hauptkatalysators (62a) in der Flussrichtung des Abgases, wobei zumindest ein Teil des Untermotor-Katalysatorabschnitts (62) in einer Fahrzeug-Aufwärts-Abwärts-Richtung direkt unter dem Kurbelgehäusebauglied (20a) vorgesehen ist, wobei zumindest ein Teil des Untermotor-Katalysatorabschnitts (62) in der Vorwärts-Rückwärts-Richtung vor der Mittelachse (Cr) der Kurbelwelle (27) vorgesehen ist, in der Links-Rechts-Richtung gesehen, wobei zumindest ein Teil des Untermotor-Katalysatorabschnitts (62) direkt über einem Liniensegment (Lw1) vorgesehen ist, welches das niedrigste der Liniensegmente ist, die Punkte auf dem Umriss des Motorhauptkörpers (20) mit Punkten auf dem Umriss der Vorderradeinheit (2) verbinden, und wobei die Flussrichtung des Abgases, das in dem Untermotor-Katalysatorabschnitt (62) fließt, entlang einer horizontalen Richtung liegt; und
ein stromaufwärtiges gemeinsames Auslassdurchgangsbauglied (65), das einen gebogenen Abschnitt (65a) umfasst, durch den die Flussrichtung des Abgases, das in dem gebogenen Abschnitt (65a) fließt, von einer Richtung entlang der Aufwärts-Abwärts-Richtung zu einer Richtung entlang der horizontalen Richtung geändert wird, wobei das stromaufwärtige gemeinsame Auslassdurchgangsbauglied (65) mit stromabwärtigen Enden der unabhängigen Auslassdurchgangsbauglieder (64, 64A, 64B, 64C) und einem stromaufwärtigen Ende des Untermotor-Katalysatorabschnitts (62) verbunden ist, wobei das stromaufwärtige gemeinsame Auslassdurchgangsbauglied (65) konfiguriert ist, das Abgas zu mischen, das von den unabhängigen Auslassdurchgangsbaugliedern (64, 64A, 64B, 64C) ausgelassen wird,
wobei das Grätschsitz-Fahrzeug **dadurch gekennzeichnet ist, dass**
ein stromaufwärtiger Sauerstoffsensor (76), der konfiguriert ist, die Sauerstoffdichte in dem Abgas zu erfassen, an dem stromaufwärtigen gemeinsamen Auslassdurchgangsbauglied (65) vorgesehen ist, das in der Vorwärts-Rückwärts-Richtung teilweise vor dem Motorhauptkörper (20) vorgesehen ist, und in der Vorwärts-Rückwärts-Richtung gesehen den Motorhauptkörper (20) teilweise überlappt.

2. Das Grätschsitz-Fahrzeug gemäß Anspruch 1, bei dem
in der Links-Rechts-Richtung gesehen, die Flussrichtungen des Abgases an den stromabwärtigen Enden der unabhängigen Auslassdurchgangsbauglieder (64, 64A, 64B, 64C) schräg nach hinten und nach unten sind, und
in der Links-Rechts-Richtung gesehen, die Flussrichtung des Abgases an einem Teil des stromaufwärtigen gemeinsamen Auslassdurchgangsbauglieds (65), das stromaufwärts von dem gebogenen Abschnitt (65a) ist, parallel zu einer Axiallinie ist, die durch die Mitte des stromabwärtigen Endes des unabhängigen Auslassdurchgangsbauglieds (64) verläuft.

3. Das Grätschsitz-Fahrzeug gemäß Anspruch 1 oder 2, bei dem
das stromabwärtige Ende und dessen Umgebung des stromaufwärtigen gemeinsamen Auslassdurchgangsbauglieds (65) sich verjüngen, so dass sich der Durchmesser nach unten vergrößert.

4. Das Grätschsitz-Fahrzeug gemäß einem der Ansprüche 1 bis 3, bei dem
in der Links-Rechts-Richtung gesehen, die Flussrichtungen des Abgases an den stromaufwärtigen Enden der unabhängigen Auslassdurchgangsbauglieder (64, 64A, 64B, 64C) nach vorne und schräg nach unten sind.

5. Das Grätschsitz-Fahrzeug gemäß einem der Ansprüche 1 bis 4, bei dem, in der Links-Rechts-Richtung gesehen, zumindest ein Teil des Untermotor-Katalysatorabschnitts (62) in der Vorwärts-Rückwärts-Richtung hinter einer linearen Linie (Lp) vorgesehen ist, die orthogonal zu den Mittelachsen (Cy) der Zylinderlöcher (22a) ist und durch die Mittelachse (Cr) der Kurbelwelle (27) verläuft.

6. Das Grätschsitz-Fahrzeug gemäß einem der Ansprüche 1 bis 5, bei dem
die Auslassvorrichtung (60) konfiguriert ist, so dass der gebogene Abschnitt (65a) die Flussrichtung des Abgases, das in dem gebogenen Abschnitt (65a) fließt, von einer Richtung entlang einer Abwärtsrichtung zu einer Richtung entlang einer Rückwärtsrichtung ändert.

7. Das Grätschsitz-Fahrzeug gemäß einem der Ansprüche 1 bis 6, bei dem
die Anzahl der Verbrennungskammern (30) vier oder mehr beträgt,
das Grätschsitz-Fahrzeug eine Mehrzahl der Untermotor-Katalysatorabschnitte (62) umfasst; und
die Auslassvorrichtung (60) konfiguriert ist, so dass nur das Abgas, das von einigen der Verbrennungskammern (30) abgelassen wird, durch einen entsprechenden einen der Untermotor-Katalysatorabschnitte (62) verläuft.

8. Das Grätschsitz-Fahrzeug gemäß einem der Ansprüche 1 bis 7, bei dem die Auslassvorrichtung (60) folgende Merkmale umfasst:
ein stromabwärtiges gemeinsames Auslassdurchgangsbauglied (63) mit einem stromaufwärtigen Ende, das mit einem stromabwärtigen Ende des Untermotor-Katalysatorabschnitts (62) verbunden ist und die Atmosphärenablassöffnung (67a) umfasst; und
zumindest einen stromabwärtigen Teilkatalysator (47, 47D), der in dem stromabwärtigen gemeinsamen Auslassdurchgangsbauglied (63) vorgesehen ist, um das Abgas zu reinigen.

9. Das Grätschsitz-Fahrzeug gemäß einem der Ansprüche 1 bis 7, bei dem
die Auslassvorrichtung (60) keine Katalysatoren außer dem Hauptkatalysator (62a) umfasst, der in dem Untermotor-Katalysatorabschnitt (62) enthalten ist.

## Revendications

1. Véhicule à selle, comprenant:
un châssis de carrosserie de véhicule (4);
une unité de moteur (11) supportée par le châssis de carrosserie de véhicule (4);
une unité de roue avant (2) comportant au moins une roue avant et prévue devant l'unité de moteur (11) dans une direction avant-arrière du véhicule lorsque vue dans une direction gauche-droite du véhicule; et
une unité de roue arrière (3) comportant au moins une roue arrière et prévue derrière l'unité de moteur (11) dans la direction avant-arrière lorsque vue dans la direction gauche-droite,
l'unité de moteur (11) comportant:
un corps principal de moteur (20) disposé de sorte que l'axe central (Cy) de chacun des trous de cylindre (22a) se situe dans la direction de haut en bas et comportant un élément de carter, des trous de cylindre (22a), des chambres de combustion (30), et des orifices d'échappement, l'élément de carter (20a) comportant un vilebrequin (27) présentant un axe central (Cr) se trouvant dans la direction gauche-droite, les chambres de combustion (30) se trouvant côte à côte dans la direction gauche-droite et chacune d'elles est partiellement formée par le trou de cylindre, et les orifices d'échappement (34b) communiquant avec les chambres de combustion respectives (30) et étant formés sur une surface avant du corps principal de moteur (30); et
un dispositif d'échappement (60) connecté aux orifices d'échappement (34b) du corps principal de moteur (20) et comportant un orifice d'évacuation à l'atmosphère (67a) évacuant les gaz d'échappement à l'atmosphère,
le dispositif d'échappement (60) comportant:
des éléments de passage d'échappement indépendants (64, 64A, 64B, 64C) connectés aux orifices d'échappement respectifs (34b) du corps principal de moteur (20), les gaz d'échappement évacués du corps principal de moteur (20) circulant vers les éléments de passage d'échappement indépendants (64, 64A, 64B, 64C);
une partie de catalyseur sous le moteur (62) comportant un catalyseur principal (62a) qui purifie les gaz d'échappement déchargés des chambres de combustion (30) pour la plupart dans les trajets d'échappement des chambres de combustion (30) à l'orifice de décharge à l'atmosphère (67a), la longueur de la partie de catalyseur sous le moteur (62) dans une direction de circulation des gaz d'échappement étant identique à la longueur du catalyseur principal (62a) dans la direction de circulation des gaz d'échappement, au moins une partie du catalyseur sous le moteur (62) étant prévue directement sous l'élément de carter (20a) dans une direction de haut en bas du véhicule, au moins une partie de la partie de catalyseur sous le moteur (62) étant prévue en avant de l'axe central (Cr) du vilebrequin (27) dans la direction avant-arrière, lorsque vue dans la direction gauche-droite, au moins une partie de la partie de catalyseur sous le moteur (62) étant prévue directement au-dessus d'un segment de ligne (Lw1) qui est le plus bas des segments de ligne connectant des points sur le contour du corps principal de moteur (20) avec des points sur le contour de l'unité de roue avant (2), et la direction de circulation des gaz d'échappement circulant dans la partie de catalyseur sous le moteur (62) se trouvant dans une direction horizontale; et
un élément de passage d'échappement collectif amont (65) qui comporte une partie courbée (65a) par laquelle la direction de circulation des gaz d'échappement circulant dans la partie coudée (65a) est changée d'une direction dans la direction de haut en bas à une direction dans la direction horizontale, l'élément de passage d'échappement collectif amont (65) étant connecté aux extrémités aval des éléments de passage d'échappement indépendants (64, 64A, 64B, 64C) et à une extrémité amont de la partie de catalyseur sous le moteur (62), l'élément de passage d'échappement collectif amont (65) étant configuré pour fusionner les gaz d'échappement évacués des éléments de passage d'échappement indépendants (64, 64A, 64B, 64C),
le véhicule à selle étant **caractérisé par le fait que**
un capteur d'oxygène amont (76) configuré pour détecter la densité d'oxygène dans les gaz d'échappement est prévu sur l'élément de passage d'échappement collectif amont (65) qui est prévu partiellement devant le corps principal de moteur (20) dans la direction avant-arrière et venant partiellement en chevauchement avec le corps principal de moteur (20) lorsque vu dans la direction avant-arrière.

2. Véhicule à selle selon la revendication 1, dans lequel
lorsque vues dans la direction gauche-droite, les directions de circulation des gaz d'échappement aux extrémités aval des éléments de passage d'échappement indépendants (64, 64A, 64B, 64C) sont obliquement vers l'arrière et vers le bas, et
lorsque vue dans la direction gauche-droite, la direction de circulation des gaz d'échappement au niveau d'une partie de l'élément de passage d'échappement collectif amont (65), qui se situe en amont de la partie courbée (65a), est parallèle à une ligne axiale passant par le centre de l'extrémité aval de l'élément de passage d'échappement indépendant (64).

3. Véhicule à selle selon la revendication 1 ou 2, dans lequel
l'extrémité aval et ses alentours de l'élément de passage d'échappement collectif amont (65) sont coniques de sorte que le diamètre augmente vers le bas.

4. Véhicule à selle selon l'une quelconque des revendications 1 à 3, dans lequel
lorsque vues dans la direction gauche-droite, les directions de circulation des gaz d'échappement aux extrémités amont des éléments de passage d'échappement indépendants (64, 64A, 64B, 64C) sont vers l'avant et obliquement vers le bas.

5. Véhicule à selle selon l'une quelconque des revendications 1 à 4, dans lequel, lorsque vue dans la direction gauche-droite, au moins une partie de la partie de catalyseur sous le moteur (62) est prévue, dans la direction avant-arrière, derrière une ligne linéaire (Lp) qui est orthogonale aux axes centraux (Cy) des trous de cylindre (22a) et passe par l'axe central (Cr) du vilebrequin (27).

6. Véhicule à selle selon l'une quelconque des revendications 1 à 5, dans lequel
le dispositif d'échappement (60) est configuré de sorte que la partie courbée (65a) change la direction de circulation des gaz d'échappement circulant dans la partie courbée (65a) d'une direction dans une direction vers le bas à une direction dans une direction vers l'arrière.

7. Véhicule à selle selon l'une quelconque des revendications 1 à 6, dans lequel
le nombre des chambres de combustion (30) est de quatre ou plus,
le véhicule à selle comporte une pluralité de parties de catalyseur sous le moteur (62); et
le dispositif d'échappement (60) est configuré de sorte que seuls les gaz d'échappement déchargés de certaines des chambres de combustion (30) passent par l'une correspondante des parties de catalyseur sous le moteur (62).

8. Véhicule à selle selon l'une quelconque des revendications 1 à 7, dans lequel
le dispositif d'échappement (60) comporte:
un élément de passage d'échappement collectif aval (63) présentant une extrémité amont connectée à une extrémité aval de la partie de catalyseur sous le moteur (62) et comportant l'orifice de décharge à l'atmosphère (67a); et
au moins un sous-catalyseur aval (47, 47D) qui est prévu dans l'élément de passage d'échappement collectif aval (63) pour purifier les gaz d'échappement.

9. Véhicule à selle selon l'une quelconque des revendications 1 à 7, dans lequel
le dispositif d'échappement (60) ne comporte pas de catalyseurs autres que le catalyseur principal (62a) inclus dans la partie de catalyseur sous le moteur (62).
